# EUROPEAN PATENT SPECIFICATION

(11) **EP 3 432 162 B1**
(45) Date of publication and mention of the grant of the patent: **07.09.2022**
(21) Application number: 18183719.6
(22) Date of filing: 16.07.2018
(51) Int. Cl.: G06F 16/683, G06F 16/783, G06Q 50/18

(54) **MEDIA CLASSIFICATION FOR MEDIA IDENTIFICATION AND LICENSING**
MEDIA-KLASSIFIZIERUNG FÜR MEDIA IDENTIFICATION UND LIZENZIERUNG
CLASSIFICATION DES MÉDIAS POUR L'IDENTIFICATION ET L'AUTORISATION DES MÉDIAS

(30) Priority: 18.07.2017 US 201715653400
(43) Date of publication of application: 23.01.2019
(73) Proprietor: Audible Magic Corporation, Los Gatos, CA 95032 (US)
(72) Inventor: Wold, Erling, San Fransisco, CA 94107 (US); Friedman, Jay, Monte Sereno, CA 95030 (US); Boulderstone, Richard, Peterborough, Cambridgeshire PE6 9NP (GB)
(74) Representative: WP Thompson

(56) References cited:
- WO-A1-02/082271
- WO-A1-2012/112573
- US-A1- 2014 180 674
- US-A1- 2015 066 497
- US-B1- 9 659 014
- US-B2- 6 990 453
- PATIL NILESH M ET AL: "Content-based audio classification and retrieval: A novel approach", 2016 INTERNATIONAL CONFERENCE ON GLOBAL TRENDS IN SIGNAL PROCESSING, INFORMATION COMPUTING AND COMMUNICATION (ICGTSPICC), IEEE, 22 December 2016 (2016-12-22), pages 599-606, XP033107082, DOI: 10.1109/ICGTSPICC.2016.7955371 [retrieved on 2017-06-22]
- Francis F. Li ET AL: "NNET BASED AUDIO CONTENT CLASSIFICATION AND INDEXING SYSTEM", International Journal of Digital Information and Wireless Communications, 31 December 2012 (2012-12-31), pages 335-347, XP055507537, Retrieved from the Internet: URL:http://citenpl.internal.epo.org/wf/sto rage/165E7D0EE440003902D/originalPdf [retrieved on 2018-09-17]
- FOOTE J T: "Content-based retrieval of music and audio", VISUAL COMMUNICATIONS AND IMAGE PROCESSING; 20-1-2004 - 20-1-2004; SAN JOSE,, vol. 3229, 3 November 1997 (1997-11-03), pages 138-147, XP002154737, DOI: 10.1117/12.290336 ISBN: 978-1-62841-730-2

## Description

### TECHNICAL FIELD

This disclosure relates to the field of media content identification, and in particular to classifying media content items into classes and/or sub-classes for media content identification and/or licensing.

### BACKGROUND

A large and growing population of users enjoy entertainment through the consumption of media content items, including electronic media, such as digital audio and video, images, documents, newspapers, podcasts, etc. Media content sharing platforms provide media content items to consumers through a variety of means. Users of the media content sharing platform may upload media content items (e.g., user generated content) for the enjoyment of the other users. Some users upload unauthorized content to the media content sharing platform that is the known work of a content owner. A content owner seeking to identify unauthorized uploads of their protected, known works will generally have to review media content items to determine infringing uploads of their works or enlist a service provider to identify unauthorized copies and seek licensing or removal of their works. The process of evaluating each and every media content item uploaded by users or evaluating the entire available content of a media content supplier (e.g., a media content sharing platform) to identify particular known works is time consuming and requires a substantial investment into computing/processing power and communication bandwidth.

In accordance with a first aspect of the present invention, a method comprises:
receiving a media content item by a first processing device, wherein the media content item comprises audio;
determining, by the first processing device, a set of features of the media content item, wherein said features comprise a plurality of features extracted from the audio of the media content item over a time interval of a tenth of a second into the frequency domain, wherein the plurality of features in the frequency domain are determined by performing a fast Fourier transform to transform the audio at the time interval into the frequency domain;
analyzing, by the first processing device, the set of features extracted from the audio media content over the time interval using a first media classification profile comprising a first Gaussian mixture model and a second Gaussian mixture model, wherein the first and second Gaussian mixture models use fifty-two features extracted from the audio media content every tenth of a second to determine a first probability of the media content item belonging to a first class of media content items representative of music and a second probability of the media content item belonging to for a second class of media content items representative of a lack of music content and thereby generate an estimate of how likely the received media content item matches said first class or said second class, wherein if the probability that a media content item belongs to a particular class exceeds or meets a probability threshold of the first media classification profile, then it is determined that the media content item is a member of that particular class;
determining whether the media content item belongs to the first class of media content items or the second class of the media content items based on a result of the analyzing; determining whether to perform identification of the media content item based on whether the media content item belongs to the first class of media content items or the second class of media content items;
responsive to determining that the media content item belongs to the first class, sending at least one of a) a portion of the media content item or b) a digital fingerprint of the media content item to a second processing device for further processing by an identification service; and
responsive to determining that the media content item belongs to the second class, bypassing further processing of the media content item without sending the media content item to the second processing device to reduce bandwidth and processor utilization of the identification service.

The method may further comprise:
dividing the media content item into a plurality of segments; and
sending at least one of a) one or more of the plurality of segments of the media content item or b) a corresponding digital fingerprint of one or more of the plurality of segments of the media content item to the second processing device.

The method may further comprise performing the following responsive to determining that the media content item belongs to the first class:
performing an analysis of the set of features using a second media classification profile comprising a third Gaussian mixture model and a fourth Gaussian mixture model, wherein the third and fourth Gaussian mixture models use the set of features extracted from the audio media content over the time interval to determine a first probability of the media content item belonging to a first sub-class of media content items and a second probability of the media content item belonging to a second sub-class of media content items; and
determining whether the media content item belongs to the first sub-class of media content items or the second sub-class of the media content items based on a result of the analysis.

In the present invention, the first sub-class of media content items may be for a first music genre and the second sub-class of media content items may be for a second music genre.

In the present invention, the media classification profile may be trained using expectation maximization initialized by k-means clustering.

In the present invention, the set of features may include at least one of loudness, pitch, brightness, spectral bandwidth, energy in one or more spectral bands, spectral steadiness, or Mel-frequency cepstral coefficients (MFCCs).

In the present invention:
the media content item may comprise video;
the first class of the media content items may be for media content items comprising a first video class; and
the second class of the media content items may be for media content items comprising a second video class.

In the present invention, the first class of media content items may be for media content items containing one or more alterations and the second class of media content items may be for media content items not containing the one or more alterations, wherein the one or more alterations comprise one or more characteristics indicative of an altered media content item to avoid detection by an identification service.

At least one of the following may be true:
a) the media content item comprises video, wherein the one or more alterations comprise a non-static border at a periphery of the video; or
b) the media content item comprises audio, wherein the one or more alterations comprise at least one of an increase in a playback speed of the audio or a reverse polarity of a stereo channel.

The method may further comprise performing the following responsive to determining that the media content item belongs to the first class:
comparing, by the second processing device, the digital fingerprint to a plurality of additional digital fingerprints of a plurality of known works;
identifying a match between the digital fingerprint and an additional digital fingerprint of the plurality of additional digital fingerprints, wherein the additional digital fingerprint is for a segment of a known work of the plurality of known works; and
determining that the media content item comprises an instance of the known work.

In the present invention:
the first processing device may be associated with a first entity that hosts user generated content;
the media content item may comprise user generated content uploaded to the first entity; and
the second processing device may be associated with a second entity comprising a database of the plurality of known works.

The present invention also includes a computer readable medium comprising instructions that, when executed by the first processing device, cause the first processing device to perform the method of the first aspect of the invention.

The present invention also includes a system comprising: a) a memory comprising instructions; b) the first processing device operatively coupled to the memory; c) the second processing device operatively coupled to the memory, wherein the first processing device and the second processing device perform the method of the first aspect of the invention responsive to executing the instructions.

Prior art document WO 2012/112573 discloses methods and systems for identifying content in a data stream by a client device. The methods may include receiving at the client device a signature file that is indicative of one or more features extracted from media content and information identifying the media content. The method may also include based on a comparison with the signature file, the client device performing a content identification of received media content rendered by a media rendering source. The client device may receive a set of signature files based on any number of factors including a physical location of the client device, a network address of the client device, a previous content recognition request of the client device, a genre preference, an artist preference, and a user profile. US 2014/0180674 A1 discloses audio matching able to discriminate between talks and music by employing Gaussian Mixture Models applied in the frequency domain. WO 02/082271 A1 employs Gaussian Mixture Models for song identification.

### BRIEF DESCRIPTION OF THE DRAWINGS

The present invention will be understood more fully from the detailed description given below and from the accompanying drawings of various embodiments of the present invention, which, however, should not be taken to limit the present invention to the specific embodiments, but are for explanation and understanding only.
**FIG. 1** is a block diagram illustrating a network environment in which embodiments of the present invention may operate.
**FIG. 2A** is a block diagram illustrating a classification controller, according to an embodiment.
**FIG. 2B** is a block diagram illustrating a machine learning profiler, according to an embodiment.
**FIG. 3A** is a flow diagram illustrating method for classifying and identifying media content items, according to an embodiment.
**FIG. 3B** is a flow diagram illustrating a method for classifying and identifying media content items, in accordance with another embodiment.
**FIG. 4A** is a flow diagram illustrating a method for determining a ratio of a media content item that has a particular classification, according to an embodiment.
**FIG. 4B** is a flow diagram illustrating a classification method for determining a percentage of media content items having a particular classification, according to an embodiment.
**FIG. 5A** is a flow diagram illustrating a method for determining the classification of a media content item, according to an embodiment.
**FIG. 5B** is a flow diagram illustrating a licensing rate determination method for a plurality of media content items, according to an embodiment.
**FIG. 6** is a sequence diagram illustrating a series of communications for determining when a media content item matches a known work, according to an embodiment.
**FIG. 7A** is a diagram illustrating a classification of a media content item, according to an embodiment.
**FIG. 7B** is a diagram illustrating a system for generating a media classification profile and applying the media classification profile to an unknown media content item for determining when the media content item matches a known work, according to an embodiment.
**FIG. 8** is a flow diagram illustrating a method for the generation of a media classification profile for media content item classification, according to an embodiment.
**FIG. 9** is a block diagram illustrating an exemplary computer system, according to an embodiment.

### DETAILED DESCRIPTION

Embodiments are described for classifying media content items. A media content item may be audio (e.g., a song or album), an image, a video, text, or other work. Media content items may be files (e.g., audio files having formats such as WAV, AIFF, AU, FLAC, ALAC, MPEG-4, MP3, Opus, Vorbis, AAC, ATRAC, WMA, and so on, or video files having formats such as WebM, Flash Video, F4V, Vob, Ogg, Dirac, AVI, QuickTime File Format, Windows Media Video, MPEG-4, MPEG-1, MPEG-2, M4V, SVI, MP4, FLV, and so on). Media content items may also be live streams of video and/or audio media. In embodiments, media content items are classified using media classification profiles derived from machine learning models. Based on the classification, licensing rates may be determined, a decision regarding whether to identify the media content items may be determined, and so on.

As used herein, the term media classification profile refers to a profile generated via a machine learning technique to classify media content items. The terms media classification profile and machine learning profile may be used interchangeably herein. The term machine learning model refers to a model generated using machine learning techniques, where the model us usable to determine a likelihood that a media content item belongs to a particular class.

Today many pieces of content are available to be viewed both offline and online through a diverse collection of media content sharing platforms. In one common case, a media content sharing platform will monetize an instance of media content during the presentation of the content to the end user. Monetization of media content includes displaying other content such as advertisements and/or promotional media alongside, before, or after presenting the media content item. Interested parties, such as a content sharing platform, a user uploading the media content item, a media content item owner, or a media content item publisher may wish to determine whether the media content item is a known work so that licensing rates may be applied for the media content item and/or the media content item can be removed from the media content sharing platform. A media content identification service may receive the media content item for processing locally or remotely over a network. A remote service may incur substantial, costly bandwidth and storage expenses to receive and process requests for identification.

Popularity of media content sharing platforms is ever increasing. The user bases for popular media content sharing platforms have already expanded to over a billion users. An active set of these users is uploading user generated content. User generated content (UGC) may include the work of another that is subject to copyright protections (e.g., video or audio known works). Every new instance of user generated content generally should be analyzed for copyright compliance against existing known works that have been registered for protection. A media content identification service can receive billions of transactions each and every month, where each transaction involves the analysis of a media content item. The magnitude of transactions received can lead to increased costs and even delayed processing of requests while preceding requests are processed. Today's solutions to media content item identification and licensing can be costly and time consuming. For example, a media content sharing platform which seeks to determine if a new instance of user generated content should be removed or flagged for licensing generally sends the recently uploaded user generated content to the media content identification service for each and every instance of uploaded content. The user generated content is then processed for a match against every registered known work in a reference database of the identification service. In another example, a digital fingerprint of the user generated content is generated from the user generated content and the digital fingerprint is then sent to the identification service and processed for a match against every registered known work in a reference database of the identification service.

To reduce the computing resource cost and/or processing time of each transaction, a media content identification service may implement a tiered transaction request processing scheme where some media content items having a first classification receive an analysis which utilizes fewer resources and other media content items having a second classification receive an analysis which utilizes more resources. Determining that a media content item request should be processed with fewer resources utilizing a classification model derived from machine learning techniques will improve the efficiency of processing transaction requests and reduce the associated costs to the media content identification service. Total processing time for processing transaction requests will decrease, allowing for an increased throughput for the identification service to improve wait times for a determination.

Additionally, some identification services may not be useful for particular classes of media content items. For example, generally rights holders are more concerned with protecting music than spoken word or other non-music audio. Accordingly, the media identification service may first classify media content items, and may then elect not to perform identification on those media content items having a certain classification (e.g., that do not contain music). Classification of media content items may use far fewer resources than identification of the media content items. Accordingly, resources may be saved in such embodiments.

In one embodiment, a media content sharing platform (e.g., such as YouTube^{®}, Vimeo^{®}, Wistia^{®}, Vidyard^{®}, SproutVideo^{®}, Daily Motion^{®}, Facebook^{®}, etc.) provides a transaction request for a media content item which has been uploaded by a user of the media content sharing platform. The media content item is provided to an input of a media classification profiler and determined to be of a classification for which no additional processing is warranted, which terminates the processing of the transaction request. The result is an increase in throughput of the transaction processing over time as any requests which may be completed early are terminated and processing for other requests is made available.

In an embodiment, the media content item is provided to an input of a machine learning model in a media classification profile and determined to be of a classification which warrants additional processing. The media content item or a fingerprint of the media content item may then be sent to the identification service for further processing to identify the media content item. A match to known works may be identified, and a licensing rate determined for the identified media content item or the identified media content item may be flagged for removal from the media content sharing platform. Additionally, the classification may identify a subset of known works to match the identified media content item with rather than comparing the identified media content item with all known works. The result reduces the processing power necessary to identify any known works and determine a licensing rate.

In a further embodiment, all of the user generated content (or a subset of the user generated content) of a media content sharing platform may be processed. Each of the media content items may be individually analyzed to determine a percentage of the media content item that has a particular classification (e.g., a percentage of the media content item that is music). A licensing rate to apply to the media content item may then be determined based on the percentage of the media content item that has the particular classification. For example, a first licensing rate may be applied if less than a threshold percentage of the media content item contains music, and a second licensing rate may be applied if more than the threshold percentage of the media content item contains music. In one embodiment, the threshold percentage is 75%. Other possible threshold percentages include 80%, 90%, 60%, 50%, and so on.

The percentage of an audio media content item that contains music may be used to determine a licensing rate to apply for a specific identified musical work that is included in the audio media content item. For example, if a musical work is included in a media content item that contains 90% music, then the licensing rate that is applied for the use of that musical work may be higher than if the musical work is included in another media content item that contains only 25% music. These different licensing rates may apply even if the length of the musical work is the same in both audio media content items. For example, a higher licensing rate may apply for a work if the work is a portion of a DJ mix than if the work is added to a video that is not generally about music (e.g., is intro music for a video on woodworking).

In a further embodiment, all of the user generated content of a media content sharing platform may be analyzed and classified. A total percentage of the media content items that have a particular classification (e.g., that are music) may then be determined based on the classification of the media content items. Different licensing rates for the media content sharing platform may then be determined based on the total percentage of the media content items having the particular classification.

In another embodiment, a media content item is provided to an input of one or more machine learning models in a media classification profile and determined to be of a classification which warrants additional processing, which elevates the processing of a transaction request to include processing techniques and/or methods utilizing additional resources. Additionally the classification may identify that the media content item has been obfuscated to hide the use of a known work.

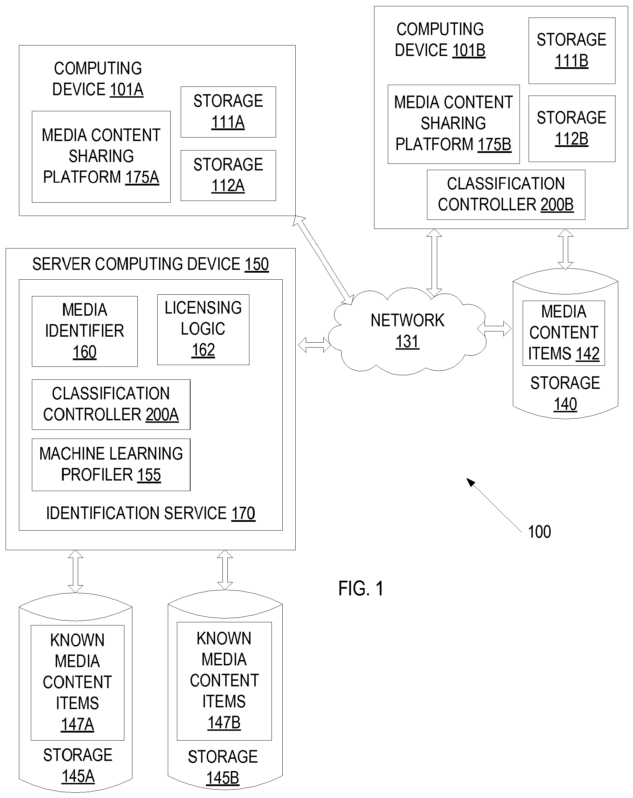

**FIG. 1** is a block diagram illustrating a network environment 100 in which embodiments of the present invention may operate. In one embodiment, network environment 100 includes one or more computing devices (e.g., computing device 101A and computing device 101B, server computing device 150), and network 131 over which computing device 101A, computing device 101B, and server computing device 150 may communicate. Any number of computing devices 101A-B can communicate with each other and/or with server computing device 150 through network 131. The network 131 can include a local area network (LAN), a wireless network, a telephone network, a mobile communications network, a wide area network (WAN) (e.g., such as the Internet) and/ or similar communication system. The network 131 can include any number of networking and computing devices such as wired and wireless devices.

The computing devices 101A-B and server computing device 150 may include a physical machine and/or a virtual machine hosted by a physical machine. The physical machine may be a rackmount server, a desktop computer, or other computing device. In one embodiment, the computing devices 101A-B and/or server computing device 150 can include a virtual machine managed and provided by a cloud provider system. Each virtual machine offered by a cloud service provider may be hosted on a physical machine configured as part of a cloud. Such physical machines are often located in a data center. The cloud provider system and cloud may be provided as an infrastructure as a service (IaaS) layer. One example of such a cloud is Amazon's^{®} Elastic Compute Cloud (EC2^{®}).

Network environment 100 includes one or more computing devices 101A-B for implementing one or more media content sharing platforms 175A-B which receive user uploads of user generated content. Such user generated content may then be accessible to other users. User generated content includes media content items that have been uploaded to the media content sharing platform. Such media content items may include copyrighted material in many instances.

The media content sharing platform 175A-B may engage with a media content identification service 170 hosted by server computing device 150. After a media content item is uploaded to the media content sharing platform 175A-B, the computing device 101A may provide the media content item to the server computing device 150 for identification by identification service 170. The media content item may be provided to server computing device 150 as a single file or multiple files (e.g., as a portion of a larger file). Alternatively, one or more digital fingerprints of the media content item may be generated and provided to identification service 170. In one embodiment, a computing device 101A-B divides a media content item into multiple segments, and one or more segments (or a digital fingerprint of one or more segments) are sent to server computing device 150. Alternatively, a digital fingerprint of the media content item may be determined from the whole of the media content item and transmitted to the server computing device 150.

In one embodiment, computing device 101A hosts a media content sharing platform 175A and may include storage 111A for storing an Operating System (OS), programs, and/or specialized applications to be run on the computing device. Computing device 101A may further include storage 112A for storing media content items of the media content sharing platform 175A. The media content items may also be stored remote (not shown) to computing device 101A and retrieved from the remote storage.

In one embodiment, computing device 101B hosts an additional media content sharing platform 175B and may include storage 111B for storing an Operating System (OS), programs, and/or specialized applications to be run on the computing device. Computing device 101B may further include storage 112B for storing media content items of the additional media content sharing platform. Media content items 142 may also be stored in remote storage 140 and retrieved from the remote storage 140 for access and playback by users. In one embodiment, remote storage 140 is a storage server, and may be configured as a storage area network (SAN) or network attached storage (NAS).

Server computing device 150 includes an identification service 170 that can identify media content items. Identification service 170 may include a classification controller 200, which may classify media content items before the media content items are identified. Classification of a media content item may utilize much fewer resources (e.g., compute resources) than identification of the media content item. Accordingly, classification of the media content item may be performed prior to identification to determine whether identification is warranted. In many instances identification of the media content item may not be warranted, in which case the resources that would have been used to identify the media content item may be conserved. Media content items may also be classified for other purposes, such as to determine licensing rates.

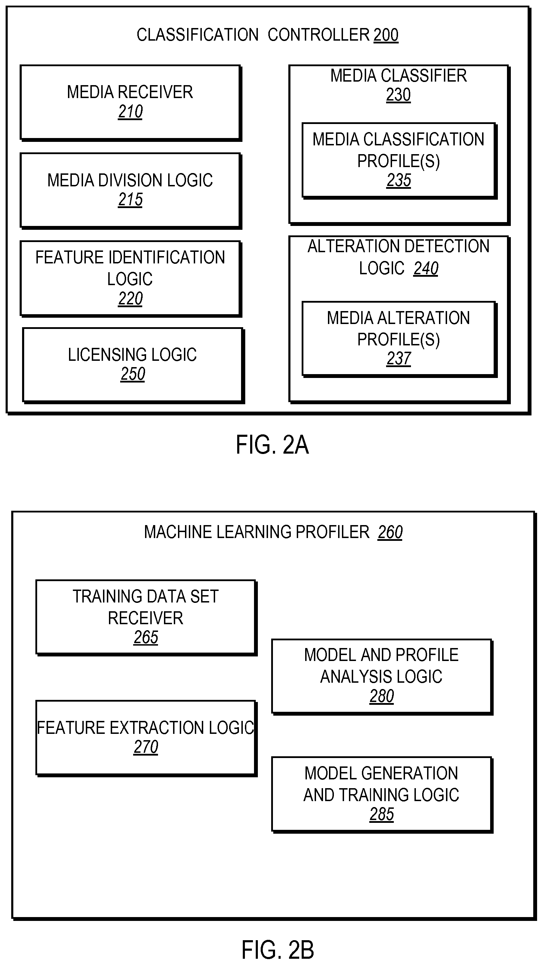

Media content items are classified in embodiments using machine learning profiles and/or machine learning models (i.e., profiles and models produced using machine learning techniques). Server computing device 150 may receive a collection of media content items, which may be used to train a machine learning profile and/or model. The media content items may be provided as an input to a machine learning profiler 155 as part of a training data set to generate the profiles and/or models. The machine learning profiler 155 may perform supervised machine learning to identify a set of features that are indicative of a first classification and another set of features that are indicative of another classification. The first set of features indicative of the first classification (e.g., indicative of music) may be defined in a first model and a second set of features indicative of the second classification (e.g., lack of music) may be defined in a second model. Alternatively, profiles may be generated for more than two classifications. The machine learning profiler 155 and generation of machine learning profiles will be discussed in more detail with respect to **FIGS. 2B****,** **7B****,** and **8** below.

Machine learning profiler 155 may generate machine learning profiles for identifying one or more classes of media content items. For example, the machine learning profiler 155 may generate a profile for identifying, for media content items having audio, whether the audio comprises music or does not comprise music. Similarly, the machine learning profiler 155 may generate a profile for identifying, for audio, a classification wherein the audio comprises a particular categorization of music (e.g., a genre including rock, classical, pop, etc.; characteristics including instrumental, a cappella, etc., and so on). The machine learning profiler 155 may generate a profile for identifying, for media content items including video, a classification wherein the video comprises a categorization of movie (e.g., a genre including action, anime, drama, comedy, etc.; characteristics including nature scenes, actor screen time, etc.; recognizable dialogue of famous movies, and so on). The techniques described herein may also be applied to other forms of media content items including images and text. A machine learning profile generated by machine learning profiler 155 may be provided to a classification controller 200A.

The machine learning profiler 155 may communicate with storages 145A-B that store known media content items 147A-B. Storage 145A and storage 145B may be local storage units or remote storage units. The storages 145A-B can be magnetic storage units, optical storage units, solid state storage units, storage servers, or similar storage units. The storages 145A-B can be monolithic devices or a distributed set of devices. A 'set,' as used herein, refers to any positive whole number of items including one. In some embodiments, the storages 145A-B may be a SAN or NAS. The known media content items 147A-B may be media content items that have a known classification and/or a known identification. Additionally, one or more digital fingerprints of the known media content items 147A-B may be stored in storages 145A-B. Licensing information about the known media content items 147A-B may also be stored.

Classification controller 200A receives a machine learning profile from the machine learning profiler 155. The machine learning profile may be used for classifying media content items received over the network 131 from the computing devices 101A-B. Audio media content items may be classified, for example, into a music classification or a non-music classification. Video media content items may be classified, for example, into an action genre or drama genre. Classification may be performed on a received media content item, a received portion or segment of a media content item, or a digital fingerprint of a media content item or a portion or segment of the media content item. Once classification is complete, the classification controller 200A may determine whether media identifier 160 and/or licensing logic 162 should be invoked. In one embodiment, classification controller 200A determines that media identifier 160 should process the media content item to identify the media content item if the media content item is determined to include music. However, classification controller 200A may determine that media identifier 160 should not process the media content item to identify the media content item if the media content item does not include music. The classification controller 200A will be discussed in more detail below.

If classification controller 200A determines that a media content item should be identified, classification controller 200A may send received data pertaining to the media content item (e.g., the media content item itself, any received portions of the media content item, a received signature of the media content item, etc.) to the media identifier 160. In some instances, the media identifier 160 is hosted by a different server computing device than the classification controller. Media identifier 160 may receive the media content item, segments of the media content item, and/or one or more fingerprints of the media content item from computing device 101A or 101B in some embodiments. For example, the features of a media content item that are used to classify the media content item may be different from a digital fingerprint of the media content item that is used to identify the media content item in embodiments.

If a media content item is to be identified, media content item compares one or more fingerprints of the media content item to fingerprints of known media content items 147A-B, where each of the known media content items 147A-B may have been registered with the identification service 170. If a fingerprint of the media content item matches a fingerprint of a known media content item 147A-B, then media identifier 160 may determine that the media content item is a copy of or a derivative work of known media content item for which the match occurred.

In some instances, classification controller 200A may determine that licensing logic 162 is to be invoked. Licensing logic 162 may be invoked to determine a licensing rate to apply to a single media content item or to a group of media content items. Licensing logic 162 may, for example, determine a licensing rate that a media content sharing platform 178A-B is to pay for all of their user generated content. In one embodiment, licensing logic 162 determines a licensing rate to apply to a media content item based on a percentage of the media content item that has a particular classification (e.g., that contains music). In one embodiment, licensing logic 162 determines a licensing rate to apply to a group of media content items based on the percentage of the media content items in the group that have a particular classification. The licensing logic 162 is described in greater detail below.

Computing device 101B may include a classification controller 200B in some embodiments. Classification controller 200B may perform the same operations as described above with reference to classification controller 200A. However, classification controller 200B may be located at a site of the media content sharing platform 175B so as to minimize network bandwidth utilization. Media content sharing platform 175B may provide a media content item (or segment of the media content item, or extracted features of the media content item) to the classification controller 200B for classification prior to sending the media content item (or segment of the media content item, extracted features of the media content item or a digital fingerprint of the media content item) across the network 131 to server computing device 150. Classification controller 200B may classify the media content item as described above. If the media content item has a particular classification (e.g., contains music), then classification controller 200B may send the media content item, one or more segments of the media content item, a digital fingerprint of the media content item and/or digital fingerprints of one or more segments of the media content item to the server computing device 150 for identification by media identifier 160. By first determining a classification for media content items at the computing device 101B and only sending data associated with those media content items having a particular classification to server computing device 150 network bandwidth utilization may be significantly decreased.

In one embodiment, a local version of the media identifier 160 is also disposed on the computing device 101B. The local version of the media identifier 160 may have access to a smaller database or library of known media content items than a database used by identification service 170. This smaller database or library may contain, for example, a set of most popular media content items that are most frequently included in user generated content. In one embodiment, the local version of the media identifier 160 determines whether a media content item can be identified. If the media content item is not identified by the local version of the media identifier, then the computing device 101B may send the information pertaining to the media content item to server computing device 150 for identification of the media content item. Use of the local media identifier may further reduce network utilization.

In addition to determining whether a media content item has a particular classification, in some embodiments, classification controller 200A sends classification information for media content items to licensing logic 162. The licensing logic 162 may then determine a licensing rate that should apply for the media content item based

**FIG. 2A** is an example classification controller 200 in accordance with some implementations of the disclosure. In general, the classification controller 200 may correspond to the classification controller 200A of server computing device 150 or the classification controller 200B of computing device 101B as shown in **FIG. 1**. In one embodiment, the classification controller 200 includes a media receiver 210, a media division logic 215, feature identification logic 220, a media classifier 230, one or more media classification profile(s) 235, alteration detection logic 240, and licensing logic 250. Alternatively, one or more of the logics and/or modules of the classification controller 200 may be distinct modules or logics that are not components of classification controller 200. For example, licensing logic 250 may be distinct from classification controller 200 as described with reference to FIG. 1. Additionally, or alternatively, one or more of the modules or logics may be divided into further modules or logics and/or combined into fewer modules and/or logics.

The media receiver 210 may receive data associated with media content items to be classified. The data may be received from a remote computing device (e.g., a media content sharing platform running on a remote computing device). Received data may be an entire media content item (e.g., an entire file), one or more segments of a media content item, a set of features of a media content item, a set of features of a segment of a media content item, a digital fingerprint of the entire media content item, and/or digital fingerprints of one or more segments of the media content item. The received data may be provided to any of the other processing blocks such as the media division logic 215, the feature identification logic 220, the media classifier 230, the alteration detection logic 240, and the licensing logic 250.

In one embodiment, a received media content item or portion of the media content item may be provided to the media division logic 215 for segmentation into a plurality of segments. The plurality of segments may be of equal or differing size based on length of time, file size, or any other characteristics. Additional characteristics may include video events identifying a scene transition (e.g., a fade to black), a measurable change of any spectral characteristics, or other features of the media content item. Additional characteristics may additionally or alternatively include audio events such as a crescendo, a period of silence, other measurable events, or other features of the media content item.

Feature identification logic 220 may be invoked to determine features of one or more segments of the media content item. A segment of the media content item as received from media receiver 210 and/or from media division logic 215 may be analyzed with respect to a set of features including loudness, pitch, brightness, spectral bandwidth, energy in one or more spectral bands, spectral steadiness, Mel-frequency cepstral coefficients (MFCCs), and so on. Feature identification logic 220 may determine values for some or all of these features, and may generate a feature vector for the segment that includes the determined feature values.

The set of features (e.g., the feature vector) determined by the feature identification logic 220 may be provided to the alteration detection logic 240 to determine if any alterations or obfuscation techniques have been applied to the media content item to avoid detection by a licensing service. The alteration detection logic 240 may flag, or otherwise identify, a received media content item as having been altered or possessing characteristics similar to altered media content items. In one embodiment, the alteration detection logic 240 determines whether a media content item has been altered based on applying the feature vectors of one or more segments of the media content item to a one or more media alteration profiles 237. The media alteration profiles 237 may be machine learning profiles that identify whether media content items have particular characteristics that are indicative of alteration. Different media alteration profiles 237 may be used for detecting different types of media alteration in some embodiments.

Alteration detection logic 240 may comprise logic for determining if media content items have been obfuscated or altered to prevent detection by an identification service, or are reproductions in another format (eight-bit/chip tunes, covers, etc.). Common alterations of audio media content items that may be detected include speeding up the playback of the audio, shifting the pitch of the audio, adding noise, distorting audio characteristics, and/or flipping the polarity of one of the stereo channels. Common alterations of video media content items that may be detected include flipping the video along the horizontal axis (mirror image), zooming in and cropping the video, cropping one side of a video, adding a static or dynamic border around the video or to one side of the video, increasing or decreasing the playback speed of the video, adding noise, distorting audio or video characteristics, contrast, color balance, frame flipping, including animations (e.g., falling leaves, stars, etc.), broadcasts with differing ads and scrolling displays, and changing the aspect ratio. Alteration detection may be based on machine learning models which have been trained with unaltered videos and altered videos.

Generally, individuals do not take efforts to alter media content items that are part of the public domain (e.g., that do not have copyright protection). Accordingly, alteration detection logic 240 may determine that a media content item is a copyrighted media content item if alteration is detected in some embodiments.

Once a media content item is classified as being an altered version of a work, an identification service may use this information to assist in identifying the media content item. In one embodiment, the alteration classification is used to modify the media content item before generating a digital fingerprint of the media content item. Different modification may be made to the media content item based on a type of alteration that is detected (e.g., based on a particular alteration classification that may be assigned to the media content item). For example, a video may be obfuscated by adding a dynamic border around the original video. If a video media content item is classified as including a border alteration, the border of the video media content item may be ignored in the generation of the digital fingerprint. The digital fingerprint will then have a closer match to a digital fingerprint of a known video that the video media content item is an altered copy of.

The features for a media content item (e.g., feature vectors for one or more segments of a media content item) may be provided to the media classifier 230 for classification. Media classifier 230 may use one or more media classification profiles 235 to classify media content items. Different media classification profiles 235 may be generated for different types of media content items and/or for different classifications. While a complete enumeration of available classifications into categories and subclasses based off of identifiable characteristics is impractical, a person of ordinary skill in the art would appreciate that the following examples are representative of the type of classes and subclasses that are available and the methods and systems presented herein are expandable to any desired classification scheme.

Media content items may be broadly divided into still images, video and audio. Some media content items may include both video components and audio components. Audio media content items may be classified as containing music or not containing music using a media classification profile 235. Additionally, feature vectors of many segments of a media content item may be analyzed using a media classification profile 235 to determine which of the segments include music and which of the segments do not include music. Accordingly, a ratio of segments that include music to segments that do not include music may be determined for a media content item.

Audio media content items that contain music may further be classified into various types of subclasses based on, for example, music genre (e.g., rock, classical, pop, instrumental, vocal, etc.), whether the music contains instruments, whether the music contains singing, whether the music contains a single performer or multiple performers, whether a specific artist is featured, whether a specific instrument or class of instrument is featured (e.g., violin, trumpet, string instruments, brass instruments, woodwind instruments, percussion instruments, etc.), whether a number of instruments are present, or whether the audio is just noise. Audio media content items that contain no music may further be classified into various types of subcategories based on, for example, whether the audio corresponds to a speech, whether the audio is for a public performance, whether the audio contains comedy, or whether the audio contains noise. Video media content items may be classified based on whether the video is static or dynamic (e.g., whether the video is a static image, a series of images presented as a slideshow or a plurality of frames of a video). Video media content items may be further classified based on whether the video is professionally created (e.g., a movie or film), whether the video is computer generated (e.g., anime, video game content, cartoons), whether the video is unprofessionally created (e.g., a blog, personal video), whether the video content includes a particular actor/actress, whether the video is a specific genre of movie (e.g., comedy, action, drama, etc.), whether the video contains particular types of scenes (e.g., space, desert, jungle, city, automobile, etc.), and so on. Classes and subclasses may be identified using one or more media classification profiles 235, as set forth above. Each media classification profile may be or include one or more machine learning models which have been trained with a training set of media content items. Machine learning algorithms, profiles, models, and training sets will be discussed in more detail below.

Alteration detection logic 240 may be integrated into media classifier 230 in some embodiments, and media alteration profiles 237 may be types of media classification profiles 235.

Once media classifier 230 has determined a classification for a particular media content item, classification controller 200 may determine whether or not the media content item should be identified. If a media content item is to be identified, then one or more of the feature vectors that were generated by feature identification logic 220 may be provided to a media identifier (e.g., media identifier 160 of FIG. 1). The feature vectors may function as digital fingerprints for the media content item. Alternatively, or additionally, one or more separate digital fingerprints of the media content item may be generated. These digital fingerprints may also be or include feature vectors, but the features of these feature vectors may differ from the feature vectors used to perform classification of the media content item.

In one embodiment, only media content items having specific classifications are processed by a media identifier. For example, media content items that are classified as containing music may be sent to the media identifier for identification. In another example, media content items that are classified as having been altered may be sent to media identifier for identification.

In some embodiments, multiple media identifiers are used, and each media identifier is configured to identify a particular type of media content item and/or a particular class of media content items. For example, a first media identifier may identify music and a second media identifier may identify non-music audio. Accordingly, media content items that are classified as containing music may be sent to the first media identifier, which may then determine whether the media content item containing music corresponds to any registered music media content items. Similarly, media content items that are classified as containing no music may be sent to the second media identifier, which may then determine whether the media content item containing no music corresponds to any registered non-musical media content items.

A media identifier identifies a media content item based on comparing one or more digital fingerprints of the media content item to digital fingerprints of a large collection of known works. Digital fingerprints are compact digital representations of a media content item (or a segment of a media content item) extracted from a media content item (audio or video) which represent characteristics or features of the media content item with enough specificity to uniquely identify the media content item. Original media content items (e.g., known works) may be registered to the identification service, which may include generating a plurality of segments of the original media content item. Digital fingerprints may then be generated for each of the plurality of segments. Fingerprinting algorithms encapsulate features such as frame snippets, motion and music changes, camera cuts, brightness level, object movements, loudness, pitch, brightness, spectral bandwidth, energy in one or more spectral bands, spectral steadiness, Mel-frequency cepstral coefficients (MFCCs), and so on. The fingerprinting algorithm that is used may be different for audio media content items and video media content items. Digital fingerprints generated for a registered work are stored along with content metadata in a repository such as a database. Digital fingerprints can be compared and used to identify media content items even in cases of content modification, alteration, or obfuscation (e.g., compression, aspect ratio changes, re-sampling, change in color, dimensions, format, bitrates, equalization) or content degradation (e.g., distortion due to conversion, loss in quality, blurring, cropping, addition of background noise, etc.) in embodiments.

The digital fingerprint (or multiple digital fingerprints) of the classified media content item may be compared against the digital fingerprints of all known works registered with a licensing service or with the known works which also meet the classification to reduce the processing resources necessary to match the digital fingerprint. Once the digital fingerprint of the received media content item has matched an instance of a known work, the media content item is identified as being a copy of the known work or a derivative work of the known work. The identification service may then determine one or more actions to take with regards to the media content item that has been identified. For example, the media content item may be tagged as being the known work, advertising may be applied to the media content item and licensing revenues may be attributed to the owner of the rights to the known work, the media content item may be removed from the media content sharing platform, and so on.

In some embodiments, classification controller 200 includes licensing logic 250. Licensing logic 250 may determine a licensing rate to apply to a particular media content item, to a collection of media content items, or to an entire business based on the classification of one or more media content items. The licensing rate may be a static rate, a tiered rate, or may be dynamically calculated according to the prevalence of the known work in the media content item. In one embodiment, a media content item is segmented into a plurality of segments. Each segment may be individually classified. Then a percentage of the segments having one or more classifications may be determined. Additionally, licensing logic 250 may determine a ratio of segments having a particular classification to segments having other classifications. For example, licensing logic may determine a ratio of a media content item that contains music. Based on the ratio and/or percentage of a media content item that has a particular classification, licensing logic 250 may determine a licensing rate. A first licensing rate may be determined if the ratio and/or percentage is below a threshold, and a second higher licensing rate may be determined if the ratio and/or percentage is equal to or above the threshold. Similar determinations may be made for collections of media content items based on the ratio or percentage of media content items in the collection that have the particular classification. Licensing rates may then be determined for the entire collection rather than for a single media content item. Determination of the licensing rate will be discussed in more detail below.

**FIG. 2B** is an example machine learning profiler 260 in accordance with some implementations of the disclosure. In general, the machine learning profiler 260 may correspond to the machine learning profiler 155 of a server 150 as shown in **FIG. 1**. In one embodiment, the machine learning profiler 260 includes a training data set receiver 265, a feature extraction logic 270, an output classification logic 275, model and profile analysis logic 280, and model generation and training logic 285. Machine learning profiler 260 generates machine learning profiles (media classification profiles) for classifying media content items. Machine learning profiler 260 may perform supervised machine learning in which one or more training data sets are provided to machine learning profiler 260. Each training data set may include a set of media content items that are identified as being positive examples of media content items belonging to a particular class of media content item and/or a set of media content items that are identified as being negative examples of media content items not belonging to a particular class of media content item. For example, a first training data set that includes media content items that are music may be provided, and a second training data set that includes media content items that are not music may be provided. Machine learning profiler 260 uses the one or more training data sets to determine features that are indicative of one or more specific classifications of media content items.

In one embodiment, a small portion of the training data sets are not used to train the machine learning profiles. These portions of training data sets may be used to test and verify the machine learning profiles once they have been generated. For example, 10-30% of a training data set may be reserved for testing and verification of machine learning profiles.

Training data set receiver 265 may receive a set of training media content items. Training media content item sets may be received one at a time, in batches, or be aggregated from a plurality of storages. The received training media content items may be provided to the feature extraction logic 270. Feature extraction logic 270 may extract features of media content items and determine a first set of features that are shared by those media content items in the positive set that belong to a particular classification and/or a second set of features that are shared by those media content items in the negative set that do not belong to the particular classification. Features extracted from audio may be in the time or frequency domains. Frequency domain analysis may be performed by using a discrete Cosine transform (DCT) or fast Fourier transform (FFT) to transform each media content item into the frequency domain. Characteristics or features of the audio that may be extracted include loudness, pitch, brightness, spectral bandwidth, energy in one or more spectral bands, spectral steadiness, Mel-frequency cepstral coefficients (MFCCs), and so on. The spectral band may be examined in detail across a plurality of bands (e.g., base, top, middle) and may be analyzed to determine a rate of change over time (e.g., derivative) of any of the characteristics. Feature sets may be used to generate a model that can be used to determine a likelihood that a media content item belongs to a particular class of media content item. Any number of features may be used in the feature sets. Fifty-two features are used in determining the optimal machine learning model to be created. The features are extracted every tenth of a second.

The feature extraction logic 270 takes as input the received training data set and extracts feature vectors representing characteristics of the audio/video media content items, and passes them to the model generation and training logic 285.

The model generation and training logic 285 performs operations such as regression analysis on the extracted features of each of the media content items of the received training data set and generates a media classification model 235 that can be, for example, used to predict whether an unclassified media content item falls within a particular classification. Model generation and training logic 285 may perform training using the feature vectors generated from the received training data set according to one or more cluster algorithms and/or other machine learning algorithms and/or classifiers to determine the optimal algorithms and set of features that are representative of a particular classification.

Classifiers that generate classification models include at least two Guassian mixture models and may include further classifiers. Some examples for illustrative purposes only and not falling within the scope of the claims include: Fisher's linear discriminant, logistic regression, Naive Bayes classifier, Perceptron, quadratic classifiers, k-nearest neighbor, boosting, decision trees, neural networks, Bayesian networks, hidden Markov models, etc. The classifier may classify the training data sets into one or more classifications or topics using hierarchical or non-hierarchical clustering algorithms for further clustering the training data set based on key features or traits (e.g., K-means clustering, agglomerative clustering, QT Clust, fuzzy c-means, Shi-Malik algorithm, Meila-Shi algorithm, group average, single linkage, complete linkage, Ward algorithm, centroid, weighted group average, and so on).

In one embodiment, machine learning models may be generated based on multiple different classifiers and/or sets of features and may be passed to the model and profile analysis logic 280 to be compared across a plurality of classifier algorithms/profiles to determine the most reliable model for classifying incoming unknown media content items using an expectation maximization algorithm. The model and profile analysis logic 280 may then compare the resulting models based on different machine learning algorithms and/or feature sets to determine an optimized model. An optimized model includes two Gaussian mixture models using fifty-two features every tenth of a second to generate an estimate of how likely an unknown media content item matches a classification. The Gaussian mixture models may utilize any range of Gaussians (e.g., 4, 8, 16, 32, 64, and 128). The model and profile analysis logic 280 may determine the most reliable model, feature extraction algorithm, and feature set to be extracted to generate the most reliable classification.

In one embodiment, model generation and training logic 285 generates a set of Gaussian mixture models. Each Gaussian mixture model is a machine learning model that will reveal clusters of features which identify a particular classification and can be used to determine the likelihood that an unknown media content item is part of the classification.

Verification of the machine learning model is performed using the unused portion of the training media content data items, for example, the 10-30 percent of the training media content items that were not used during the training of the machine learning model. Upon a satisfactory evaluation, for example when the evaluation results in at least ninety-five percent accuracy in correct classification of the training media content items, the one or more generated models are combined into a media classification profile 235. In one embodiment, a media classification profile 235 includes a first model that will test a media content item for music and a second model that will test the media content item for an absence of music. In another embodiment, a separate media classification profile 235 is generated for testing for music and for testing for lack of music. Aspects of the machine learning profiler will be discussed with more detail below.

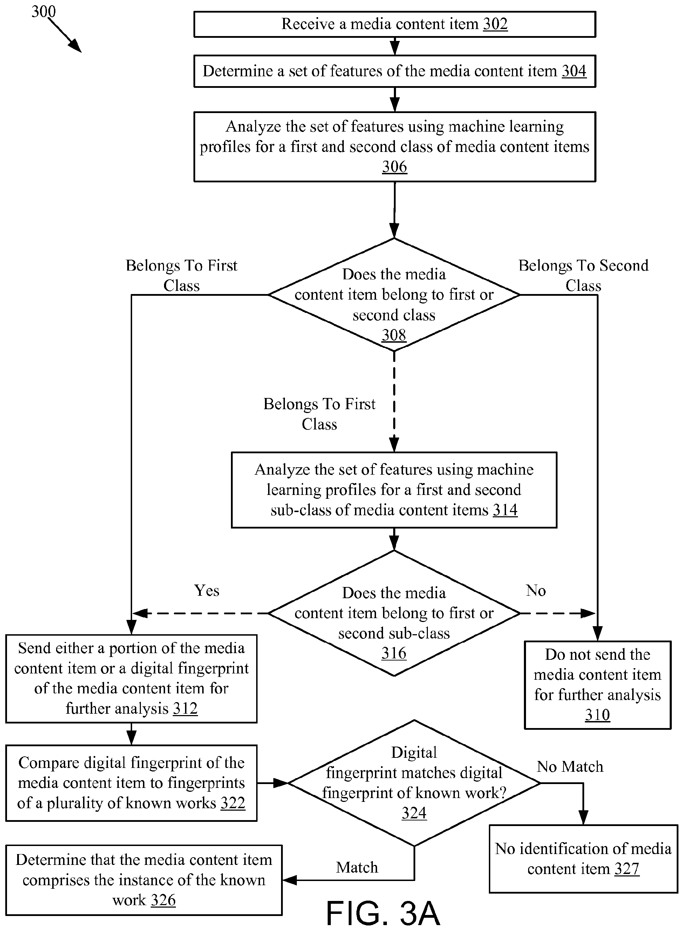

**FIGS. 3A-5B** are flow diagrams illustrating various methods of classifying media content items and performing actions based on a result of such classification. The methods may be performed by processing logic that comprises hardware (e.g., circuitry, dedicated logic, programmable logic, microcode, etc.), software (e.g., instructions run on a processor), firmware, or a combination thereof. The methods may be performed, for example by one or more of computing devices 101A-B and/or server computing device 150 of **FIG. 1** in embodiments.

**FIG. 3A** is a flow diagram illustrating one embodiment of a method for classifying and identifying media content items. At block 302 of method 300, processing logic receives a media content item. The media content item may be received from additional processing logic hosted by a same computing device as the processing logic executing the method. Alternatively, the media content item may be received from a remote computing device. In one embodiment, the media content item is a live stream, and the live stream is periodically analyzed. For example, a segment of the live stream may be analyzed every few minutes. Alternatively, the media content item may be a media content item (e.g., a file) that is stored in a storage. For example, the media content item may be received at a client side processing logic implementing one or more operations of method 300. By implementing the processing logic on a client device, there is no or minimal network bandwidth used in transferring the media content item.

A set of features of the media content item is determined at block 304. In one embodiment, the set of features that are extracted are the set of features which optimally determine the likelihood that a media content item belongs to a classification. For example, the features that are extracted from the media content item may include the loudness envelope of the audio component of the media content item to determine the loudness at each moment in time. Features representative of the brightness of the audio (e.g., bass and treble component of the audio) may also be extracted. A derivative of the loudness envelope may be taken to identify the change in the loudness at each time. An FFT algorithm identifying other characteristics and an MFCC algorithm is applied to identify the frequency domain characteristics and the clustered features of the media content item. Features may be extracted at an .10 second interval.

At block 306, the set of features is analyzed using machine learning profiles for a first and second class of media content items. In one embodiment, a single machine learning profile (also referred to herein as a media classification profile or media alteration profile) contains models for multiple different classifications of media content items. Alternatively, a separate machine learning profile may be used for each model. In one embodiment, the machine learning profiles comprise a machine learning model and other associated metadata. The extracted features of the media content item are supplied to the machine learning model(s) (e.g., as a feature vector) and an output is generated indicating the likelihood that the media content item matches the classification of the machine learning profile. For example, a media classification profile may identify a first percentage chance that a media content item comprises audio features representative of music and a second percentage change that the media content item comprises audio features representative of a lack of music.

If at block 308 it is determined that the media content item belongs to the first class of media content items, the method continues to block 312. If it is determined that the media content item belongs to the second class of media content items, the method continues to block 310. In one embodiment, the percentage chance (or probability or likelihood) that the media content item belongs to a particular classification is compared to a threshold. If the percentage chance that the media content item belongs to a particular class exceeds the threshold (e.g., which may be referred to as a probability threshold), then the media content item may be classified as belonging to the particular class.

In some embodiments, thresholds on particular features may be used in addition to the probability threshold. For example, specific thresholds may exist for only a first feature, such as the loudness feature, or the threshold may exist for multiple features, such as both the loudness and brightness features. Thresholds and any accompanying combination of thresholds may be stored in the metadata of the associated machine learning profile. If the probability that a media content item belongs to a particular class exceeds or meets a probability threshold of the machine learning profile, then it is determined that the media content item is a member of that particular class. If the probability fails to meet or exceed the probability threshold, then it is determined that the media content item does not belong to the class and/or belongs to another class. In one embodiment, a machine learning profile may have a second machine learning model with its own thresholds to be applied to the media content item to determine if the media content item belongs to the second class.

At block 310, when the media content item is determined to belong to the second class of media content items, the media content item will not be sent for further analysis. For example, no additional analysis may be performed if an audio media content item is classified as not containing music. In an example, generally audio media content items are processed to determine whether the media content item matches one of multiple known audio works, referred to as identification. Such processing can utilize a significant amount of processor resources as well as network bandwidth resources. However, usually non-musical audio media content items are not registered for copyright protection. A significant amount of audio media content items on some media content sharing platforms may not contain music (e.g., up to 50% in some instances). Accordingly, resource utilization may be reduced by 50% in such an instance by identifying those media content items that do not contain music and then failing to perform additional processing on such media content items in an attempt to identify those media content items. A determination that the media content item belongs to a second class that will not be further analyzed reduces the bandwidth and/or processor utilization of an identification service and frees up additional processing resources for analyzing media content items that belong to the first class. In an example, the first class is for media content items which have music and are to be matched against all registered copyrighted music and the second class is for media content items which do not have music and will not match any registered copyrighted music. Determining that the media content item does not contain music removes a need to test the media content item against any registered copyrighted music, allowing the further processing to be bypassed and the method 300 to end without incurring additional bandwidth and processing resource usage.

In one example, a further analysis is performed on media content items that have the first classification (e.g., that contain music in one example). Such further analysis may be performed on a separate computing device than the computing device that performed the classification. Accordingly, at block 312 processing logic sends either a portion of the media content item or a fingerprint of the media content item to second processing logic for further analysis. The second processing logic may be on a same computing device as the processing logic or may be on a separate computing device than the processing logic. If a digital fingerprint is to be sent, then processing logic generates such a digital fingerprint. The digital fingerprint may be a feature vector of a segment of the media content item. The feature vector may be a same feature vector that was used to perform classification of the media content item or may be a different feature vector. In one embodiment, digital fingerprints are generated for multiple segments of the media content item, and the multiple digital fingerprints are sent for identification.

In some embodiments, further classification may be performed on media content items prior to performing identification. In one embodiment, if at block 308 the media content item has the first classification, the method proceeds to block 314 instead of block 312. At block 314, processing logic analyzes the set of features (e.g., the feature vector) using one or more additional machine learning profiles. The one or more additional machine learning profiles may classify the media content item as belonging to one or more sub-classes within the first class. For example, a music class may be further classified based on genre. At block 316, processing logic may determine whether the media content item belongs to a particular first or second sub-class. If the media content item fails to belong to one of these sub-classes, the method may proceed to block 318, and the media content item may not be further analyzed. If the media content item does belong to a particular subclass, then the method may continue to block 312. A determination that the media content item not belonging to either the first or second class that will not be further analyzed reduces the bandwidth requirements of an identification.

At block 322, processing logic compares the digital fingerprint (or multiple digital fingerprints) of the media content item to digital fingerprints of a plurality of known works. At block 324, processing logic determines whether any of the digital fingerprints matches one or more digital fingerprints of a known work. If a match is found, the method continues to block 326, and the media content item is identified as being an instance of the known media content item or a derivative work of the known media content item. If at block 324 no match is found, then the method proceeds to block 327 and the media content item is not identified.

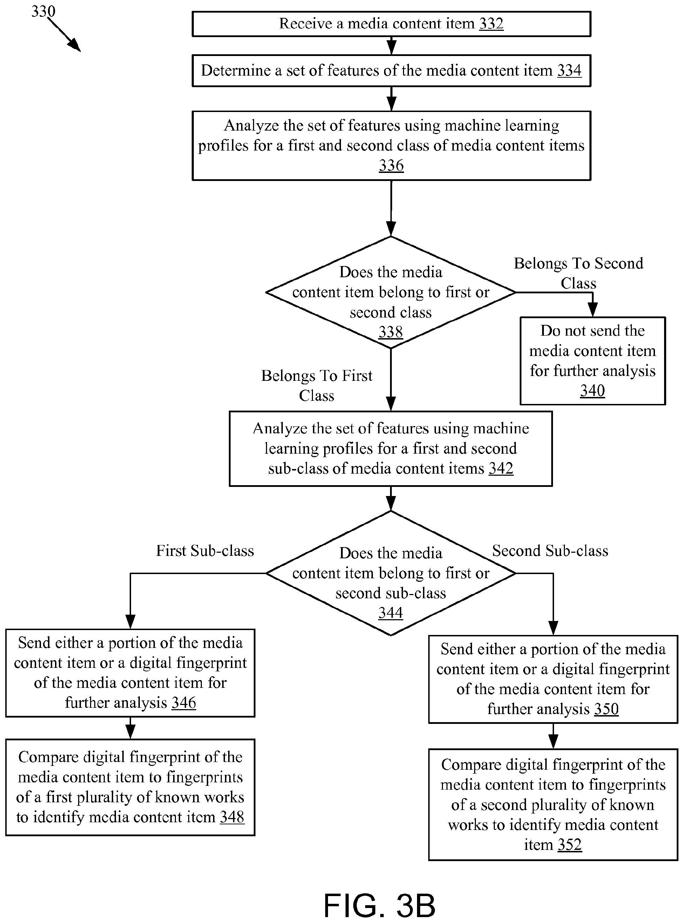

FIG. 3B is a flow diagram illustrating a method 330 for classifying media content items, in accordance with another embodiment. At block 332 of method 330, processing logic receives a media content item. In one embodiment, the media content item is a live stream, and the live stream is periodically analyzed. For example, a segment of the live stream may be analyzed every few minutes. Alternatively, the media content item may be a media content item (e.g., a file) that is stored in a storage. At block 334, processing logic determines a set of features of the media content item. In one embodiment, a feature vector is generated based on the set of features. The feature vector may be a first digital fingerprint of the media content item.

At block 336, the set of features is analyzed using machine learning profiles for a first and second class of media content items. In one embodiment, a single machine learning profile (also referred to herein as a media classification profile or media alteration profile) contains models for multiple different classifications of media content items. Alternatively, a separate machine learning profile may be used for each model. In one embodiment, the machine learning profiles comprise a machine learning model and other associated metadata. The extracted features of the media content item are supplied to the one or more machine learning models of the machine learning profile (e.g., as a feature vector) and an output may be generated indicating the likelihood that the media content item matches the classification of the machine learning profile. For example, a media classification profile may identify a first percentage chance that a media content item comprises audio features representative of music and a second percentage change that the media content item comprises audio features representative of a lack of music.

At block 338, processing logic determines whether the media content item belongs to a first or second class of media content items. If at block 338 it is determined that the media content item belongs to the first class of media content items, the method continues to block 342. If it is determined that the media content item belongs to the second class of media content items, the method continues to block 340. In one embodiment, the percentage chance (or probability) that the media content item belongs to a particular classification is compared to a threshold. If the percentage chance that the media content item belongs to a particular class exceeds the threshold (e.g., which may be referred to as a probability threshold), then the media content item may be classified as belonging to the particular class.

In one embodiment, in which the media content item is a live stream, processing logic may not identify contents of the live stream so long as a latest segment of the live stream has been classified as not containing music. Once a segment is classified as containing music, then processing logic may begin performing operations to identify music in the live stream.

At block 340, when the media content item is determined to belong to the second class of media content items, the media content item will not be sent for further analysis. For example, no additional analysis may be performed if an audio media content item is classified as not containing music.

At block 342, processing logic analyzes the set of features (e.g., the feature vector) using one or more additional machine learning profiles. The one or more additional machine learning profiles may classify the media content item as belonging to one or more sub-classes within the first class. For example, a music class may be further classified based on genre. At block 344, processing logic may determine whether the media content item belongs to a particular first or second sub-class. If the media content item belongs the first sub-class, the method may proceed to block 346. If the media content item belongs the second sub-class, the method may proceed to block 350.

A further analysis is performed on media content items that have the first sub-classification (e.g., that contain music of a first genre). Such further analysis may be performed on a separate computing device than the computing device that performed the classification. Accordingly, at block 346 processing logic sends either a portion of the media content item or a digital fingerprint of the media content item to second processing logic for further analysis. The digital fingerprint may be the same digital fingerprint used to classify the media content item or may be a second digital fingerprint that uses one or more different features than those used to classify the media content item. The second processing logic may be on a same computing device as the processing logic or may be on a separate computing device than the processing logic. If a second digital fingerprint is to be sent, then processing logic generates such a second digital fingerprint. The second digital fingerprint may be a feature vector of a segment of the media content item.

At block 348, second processing logic compares the digital fingerprint (e.g., second digital fingerprint) of the media content item to digital fingerprints of a first plurality of known works having the first sub-class. The first plurality of known works may be maintained in a first database. Second processing logic determines whether any of the digital fingerprints matches one or more digital fingerprints of a known work. If a match is found, the media content item is identified as being an instance of the known media content item or a derivative work of the known media content item. If no match is found, then the media content item is not identified.

A further analysis is performed on media content items that have the second sub-classification (e.g., that contain music of a second genre). Such further analysis may be performed on a separate computing device than the computing device that performed the classification. The separate computing device may be the same as or different from the separate computing device used at blocks 346-348. Accordingly, at block 350 processing logic sends either a portion of the media content item or a digital fingerprint of the media content item to third processing logic for further analysis. The digital fingerprint may be the same digital fingerprint used to classify the media content item or may be a second digital fingerprint that uses one or more different features than those used to classify the media content item. The third processing logic may be on a same computing device as the processing logic and/or second processing logic or may be on a separate computing device than the processing logic and/or second processing logic. If a second digital fingerprint is to be sent, then processing logic generates such a second digital fingerprint. The second digital fingerprint may be a feature vector of a segment of the media content item.

At block 352, third processing logic compares the digital fingerprint (e.g., second digital fingerprint) of the media content item to digital fingerprints of a second plurality of known works having the second sub-class. The second plurality of known works may be maintained in a second database. Third processing logic determines whether any of the digital fingerprints matches one or more digital fingerprints of a known work. If a match is found, the media content item is identified as being an instance of the known media content item or a derivative work of the known media content item. If no match is found, then the media content item is not identified.

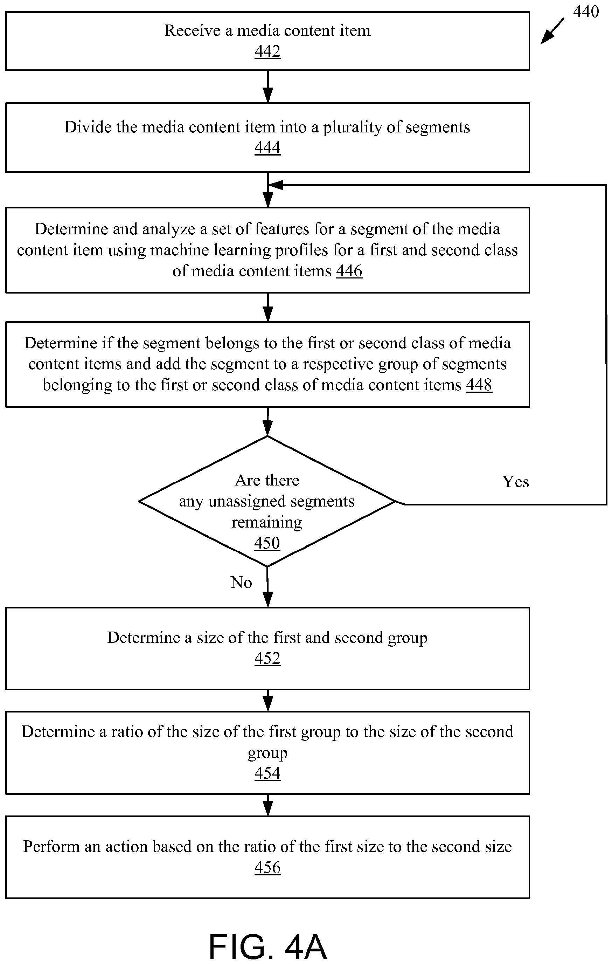

**FIG. 4A** is a flow diagram illustrating a method 440 for determining a ratio of a media content item that has a particular classification. At block 442 of method 440, processing logic receives a media content item from a local or remote source. The media content item may be any of the aforementioned media content items. At block 444, processing logic divides the media content item into a plurality of segments.

The multiple segments may have the same size or may have different sizes (e.g., in terms of length of time, file size, etc.). Example sizes include 5 seconds, 10 seconds, 20 seconds, etc. of the media content item. Segments may also be sized based on characteristics of the media content item. Characteristics may include video events identifying a scene transition (e.g., a fade to black), a measurable change of any spectral characteristics, or other video features of the media content item. Characteristics may additionally or alternatively include audio events such as a crescendo, a period of silence, other measurable events, or other audio features of the media content item. In one embodiment, segments overlap in time.

At block 446, processing logic determines a set of features of a segment of the media content item. The set of features may include features at multiple time offsets in the segment. Processing logic then analyzes the set of features using one or more machine learning profiles. The machine learning profiles may be usable to classify media content items as belonging to a first class and/or a second class as discussed above. At block 448, processing logic determines whether the segment of the media content item belongs to the first class or the second class. Processing logic may then add the segment to a first group of segments if the segment has the first class and may add the segment to a second group of segments if the segment has the second class.

At block 450, processing logic determines whether there are any remaining segments of the media content item that have not yet been classified. If there are any remaining unclassified segments, the method returns to block 446 and a next segment is processed. Accordingly, while there are any remaining unassigned segments at block 450, segments are selected and processed using method steps of blocks 446-450 until all segments have been assigned to a group according to their classification as determined at block 448. When all segments are assigned to a group, the method proceeds to block 452 and a size of the first and second group is determined. In an embodiment, groups are maintained in a data structure. Determining a size of the group may be performed by reading the number of segments assigned to the group or reading a value of the data structure which tracked the size of the group as segments were added at block 448. For example, if a media content item was divided into one hundred segments at block 444 it is possible that twenty segments were assigned to the first group and eighty segments were assigned to the second group.

A ratio of the size of the first group to the size of the second group is determined at block 454. Alternatively, other statistics regarding an amount of the media content item having the first classification and amounts of the media content item having other classifications may be determined. For example, if there are twenty segments in the first group and eighty segments in the second group, the ratio of the first group to the second group would be 1:4 (i.e., the first group comprises twenty percent of the segments and the second group comprises eighty percent of the segments). Alternatively, or additionally, a percentage of the segments that have each class may be computed. In the above example, the first group may comprise 20% of the segments and the second group may comprise 80% of the segments. Ratios and percentages may be used interchangeably to show the same data in a different format.

An action may be performed based on the ratio of the size of the first group to the size of the second group at block 456. Alternatively, or additionally, the action may be performed based on the percentage of the segments belonging to the first group and/or the second group. In embodiments, the ratio or percentage of segments belonging to one or more classes may be compared to a threshold (or multiple thresholds). An action to perform may be determined based on whether the ratio and/or percentage meets or exceeds the threshold. In one embodiment, the first group may indicate a class size according to segments which comprise music and the second group may indicate a class size according to segments which do not comprise music. A first action may be performed because the percentage of the segments that comprise music failed to meet the threshold. Alternatively, a second action may be performed if the percentage of the segments that comprise music met the threshold. For example, no action may be taken if the use of music in the media content item is determined to be insignificant to the overall media content item (e.g., less than 30%). In one embodiment, a licensing rate may be determined based on a temporal fraction based on how much of the media content item contains music and how much of the media content item is fails to contain music. For example, a higher licensing rate may be applied if a threshold percentage of the segments of the media content item contain music. Method 440 may be extended to streaming video and/or audio, wherein the received media content item is a live stream, and the plurality of segments are continually parsed from the incoming video or audio stream.

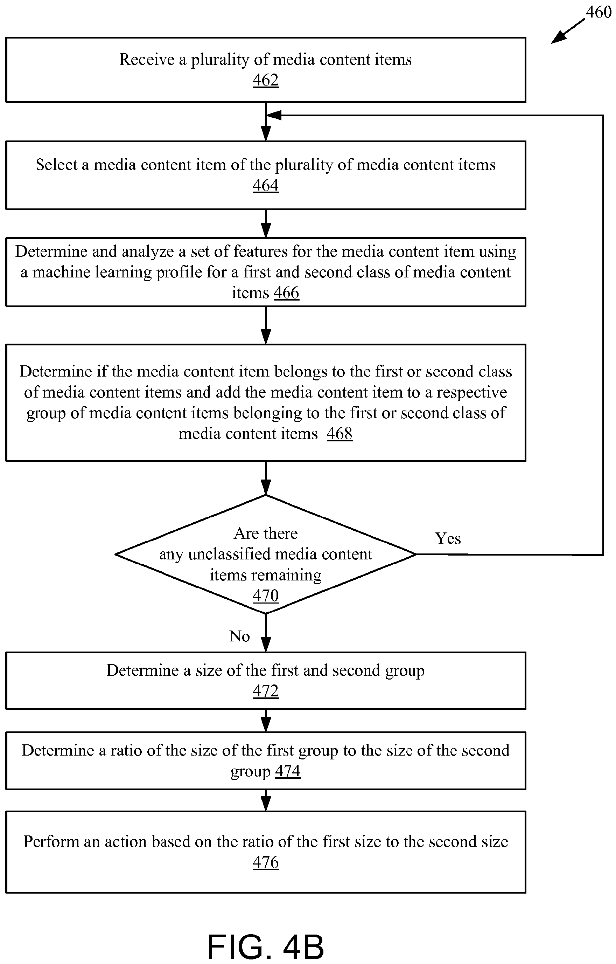

**FIG. 4B** is a flow diagram illustrating a method 460 for determining percentage of a group of media content items having a particular classification, according to an embodiment. At block 462 of method 460, processing logic receives a plurality of media content items. Alternatively, processing logic may receive one or a few media content items of a group. The plurality of media content items may be received one at a time or in a batch.

At block 464, a media content item of the group is selected. At block 466, processing logic determines a set of features of a media content item. In one embodiment, the media content item is divided into a plurality of segments, and feature sets are determined for each of the segments. A feature vector may be generated for each set of features. Processing logic then processes the feature vector (or multiple feature vectors) using one or more machine learning profiles. The analysis may indicate whether the media content item corresponds to a first class or a second class of media content items. Alternatively, more than two classes may be used and/or one or more subclasses may be used.

At block 468, processing logic determines whether the media content item belongs to a first class or second class (or one or more additional classes and/or subclasses), and adds the media content item to an appropriate group of media content items based on the class or classes assigned to it.

In one embodiment, a first percentage of the media content item that belongs to a first class and a second percentage of the media content item that belongs to a second class are determined. A first weighted value may then be added to a first group associated with the first class based on the percentage of the media content item having the first classification. A second weighted value may be added to a second group associated with the second class based on the percentage of the media content item having the second classification.

At block 470, processing logic determines whether there are any unclassified media content items remaining. While there are any remaining unclassified media content items at block 470, segments are selected and processed using method steps of blocks 464-468 until all media content items have been classified and assigned to a group according to their classification as determined at block 466. When all media content items have been classified and assigned to an appropriate group, a size of the first and second group is determined at block 472. In an embodiment, information on groups is maintained in a data structure. A size of a group may be determined by reading the number of media content items assigned to the group or reading a value of the data structure which tracked the size of the group as media content items were added.

A ratio of the size of the first group to the size of the second group is determined at block 474. Alternatively, or additionally, percentages of the media content items belonging to the first group and to the second group may be determined. At block 476, processing logic performs an action based on the ratio of the first size to the second size. Alternatively, or additionally, the action may be performed based on the percentages of media content items belonging to the first and/or second groups. One example action that may performed at block 476 is setting a licensing rate to apply to the media content items in a set of media content items (e.g., all of the media content items that were analyzed or all media content items controlled by or played by a particular entity). The examples of method 440 apply to method 460, except that the action performed (e.g., the licensing rate that is set) is for multiple media content items rather than for a single media content item.

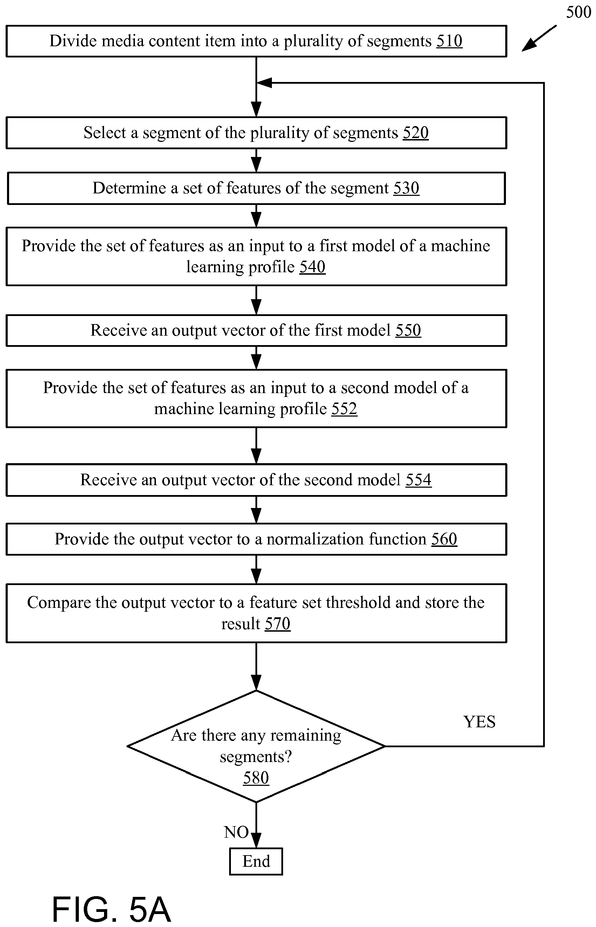

**FIG. 5A** is a flow diagram illustrating a method 500 for determining the classification of a media content item, according to an embodiment. Method 500 may be performed to process a media content item and determine if any portion of the media content item matches a first or second classification of media content items based on a feature set threshold.

At block 510 of method 500, processing logic divides a media content item into a plurality of segments. A segment is selected from the plurality of segments at block 520. A set of features of a segment of the media content item are determined at block 530.

At block 540, the set of features are provided as an input to a first model of a machine learning profile. In one embodiment, a machine learning profile comprises a machine learning model and other associated metadata. The extracted features of the media content item are supplied to the machine learning model. The machine learning model detects a classification of media content items using any number of features. For example, a classification identifying if a media content item comprises music may be generated and trained according to two features, one hundred features, or anything in between. Adding features to the machine learning model increases the bandwidth and processing requirements associated with use of the machine learning model but may result in increased accuracy of the model. In an embodiment, fifty-two features are the optimal number of inputs to the machine learning model for determining if the media content item comprises music. In one embodiment, a feature vector containing the set of features usable to classify the media content item is provided. Features which are selected for the input may include: spectral flatness, perceptual spread, spectral roll-off, spectral decrease, spectral shape statistics, spectral slope, the delta of each of the features (e.g., the derivative for showing a change over time), and the delta-delta of each of the features (e.g., the second derivative for showing the rate of change over time). The machine learning model receives the feature set and performs regression, classification, and/or pattern recognition on the features of the feature set to generate likelihood values or scores. In one embodiment, the set of features that are extracted are the set of features which optimally determine the likelihood that a segment of the media content item belongs to a particular classification.

At block 550, an output vector of the first model is received. In an embodiment, the output vector comprises a plurality of likelihood values each associated with an input of the feature set identifying the likelihood that the feature of the feature set places the feature into the classification that the machine learning model is trained to detect. In an example, a set of three features may be supplied to a machine learning model and a likelihood output vector of {.75, .75, .93} may indicate that there is a .75 likelihood that the media content item matches the features of the loudness, brightness, and a .93 likelihood that the media content item matches the an energy of the spectral envelope. Or an output vector {.90, .07} may indicate that there is a .90 likelihood that the media content item matches a first class and a .07 likelihood that the media content item matched a second class. Alternatively, a single value may be output, where the single value is indicative of an overall likelihood or certainty that the media content item belongs to a particular class. The likelihood values output by the machine learning model may not always be easily interpreted. For example, a different set of three features (i.e., MFCCs for a small spectrum) may be supplied to a machine learning model and a likelihood output vector of {123, 756, 355} may be received. The machine learning profile may contain other associated metadata identifying an expected output range of values for a feature of the feature set (e.g., 1-1000, 213-275, etc.). The other associated metadata may be usable to interpret the likelihood values of the output vector.

At block 552, the set of features are provided as an input to a second model of a machine learning profile. At block 554, an output vector of the second model is received. In an embodiment, the output vector comprises a plurality of likelihood values each associated with an input of the feature set identifying the likelihood that the feature of the feature set places the feature into the classification that the second model is trained to detect.

At block 560, the output vectors are provided to a normalization function. In an embodiment, the output vectors are provided alongside the other associated metadata or may be provided alone. For example, the likelihood values of the feature set may be scaled according to other associated metadata. For a received likelihood value of 250, with a min expected value of 100 and a max expected value of 300, the likelihood value may be scaled such that (250-100)/(300-100)=0.75, which is normalized to allow for better interpretation of the likelihood. When comparing a plurality of likelihood values to identify a classification with the highest likelihood, a softmax may be taken of the values. For example, a machine learning profile applying a multiclass machine learning model may predict categories for three or more classifications using multiclass logistic regression, multiclass neural network, multiclass decision forest or jungle, or a one-v-all multiclass. The output vectors may comprise the likelihood values that the feature set of the media content item matches each of the trained classes. For example, a multiclass classification algorithm may be trained to determine if a media content item matches a subgenre of music including rock, pop, country, rap, electronic, folk, or classical. The resulting likelihood values may be { 1, 2, 3, 4, 1, 2, 3}, which, when applied to a softmax function, would result in a normalized exponential function which highlights the most likely of the classes and squashes the least likely of the classes resulting in an normalized output vector of {0.024, 0.064, 0.175, 0.475, 0.024, 0.064, 0.175}. The normalized output vector allows for an easy visualization of the most likely class (e.g., rock).

The output vectors are compared to a feature set threshold and the result is stored at block 570. The other associated metadata of the machine learning profile may identify the type of threshold to apply to the normalized output vectors and/or may identify the value of a single threshold that may be met or provide a combination of thresholds that must be met. In an embodiment, only the highest value is taken from the output vector to identify a probable classification. For example, the starting threshold may be set to 0 or some minimum threshold (i.e., .25), and each output value of the normalized output vectors may be compared with the threshold, sequentially, such that each entry which exceeds the threshold is set as the new threshold. The entry which, at the finish, is the threshold will be identified and stored to identify which classification the media content item should be compared against. Any other algorithm for determining the max value may also be applied. In an embodiment, all values which exceed a set threshold are identified and stored. For example, a global threshold of .300 may be identified by the metadata and compared to each output value of the normalized output vectors. Any classification which satisfies the threshold would be stored. In an embodiment where the machine learning profile has a machine learning model for determining a subgenre of music including rock, pop, country, rap, electronic, folk, or classical, output vectors may establish that an input media content item satisfies a minimum threshold for both rock and pop genres of music. The media content item may be supplied to associated databases with rock and pop songs through a copyright compliance service.

While there are any remaining segments at block 580, segments are selected and processed using method steps of blocks 520-570 until all segments have been processed. When all segments are processed, the method 500 may end. Once all segments of a media content item are processed, the classification results of the different segments may be combined. For example, the output vectors of the media content item may be averaged to determine an average output vector. The average output vector may then be used to determine a classification for the entire media content item. Alternatively, only one or a few segments may be processed or classification of a media content item.

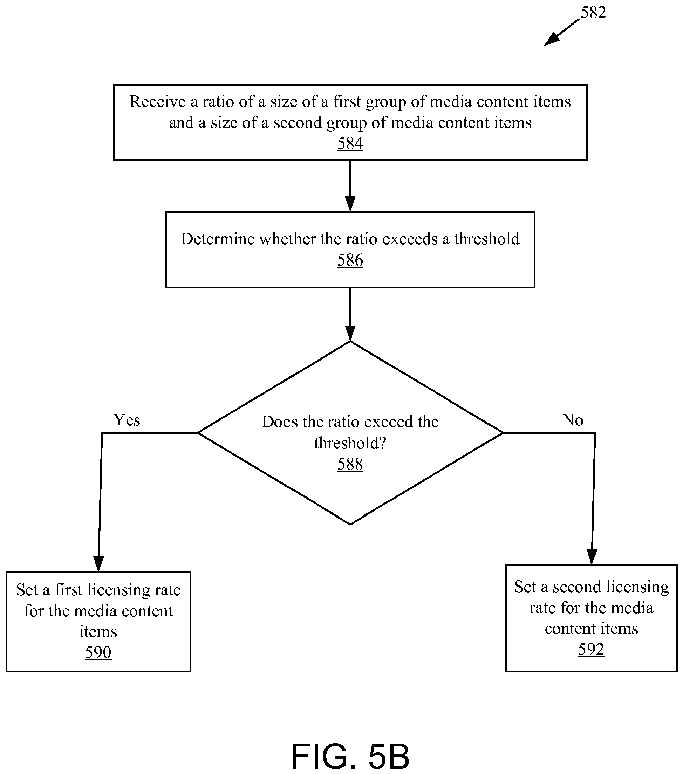

**FIG. 5B** is a flow diagram illustrating a licensing rate determination method 582 for a plurality of media content items, according to an embodiment. At block 584 of method 582, processing logic receives a ratio of a size of a first group of media content items and a size of a second group of media content items. Alternatively, processing logic may receive a percentage value of the group of media content items belonging to a first group and/or a percentage value of the group of media content items belonging to a second group. In one embodiment, an entity (e.g., social media platform, media content item sharing platform, etc.) being evaluated may provide all media content items hosted by the entity to a licensing service provider. Alternatively, the entity may provide a subset of its media content items for classification. For example, an entity with ten million media content items may be processed according to method 460 of **FIG. 4B****.** A result of the processing may be a determination that eight million media content items belong to a first group and two million media content items belong to a second group. For example, an entity may host media content items comprising an audio component, the first group may include media content items comprising music, and the second group may include media content items which do not comprise music.

At block 586, processing logic determines whether the ratio (or percentage value of a particular class of media content item) exceeds a threshold. The threshold may be based on licensing rates that have been set by and/or negotiated with a rights holder to a particular class of media content item (e.g., American Society of Composers, Authors and Publishers (ASCAP), Society of European Stage Authors and Composers (SESAC) or Broadcast Music, Inc. (BMI), each of which aggregate rights from multiple different publishers). In an embodiment, the threshold may be set at a ratio of 3:1 (i.e., the first group comprises seventy-five percent of the media content items and the second group comprises twenty-five percent of the media content items) or at a value of .75 (seventy-five percent) compared only to the total of the first group. In an embodiment, the ratio exceeding a threshold identifies that the majority of the media content items hosted by the entity comprise music and the entity may be subject to a higher licensing rate. In an embodiment, the ratio failing to exceed the threshold identifies that the majority of the media content items hosted by the entity do not comprise music and the entity may be subject to a lower licensing rate. If the received ratio exceeds the threshold, then method proceeds from block 588 to block 590. If the ratio does not exceed the threshold, the method proceeds from block 588 to block 592.

At block 590, a first licensing rate is determined for the entity. At block 592, a second licensing rate is determined for the entity. The second licensing rate may be lower than the first licensing rate.

In another embodiment, the received ratio may be compared to multiple thresholds, each associated with a tiered licensing rate. For example, a ratio of 1:9 (i.e., the first group comprises ten percent of the media content items and the second group comprises ninety percent of the media content items) may be associated with a first tier (smallest) licensing rate if not exceeded, a ratio of 9:1 (i.e., the first group comprises ninety percent of the media content items and the second group comprises ten percent of the media content items) may be associated with a second tier of licensing rate if not exceed, and may be associated with a larger tier (largest) licensing rate if exceeded. Additional intermediate tiers may also exist for other ratios, such as 2:8, 3:7, 4:6, 5:5, 6:4, 7:3, 8:2, and so on.

In an embodiment, the ratio of a size of a first group to a size of a second group may apply to the segments of an individual media content item or the segments of a plurality of media content items rather than only media content items as a whole of a plurality of media content items. Similar licensing rate determinations may be applied based upon the ratios of a group of segments as detailed above. For example, a determination may be made of a ratio or percentage of a media content item that contains music, and a licensing rate for the media content item may be determined based on the ratio or percentage.

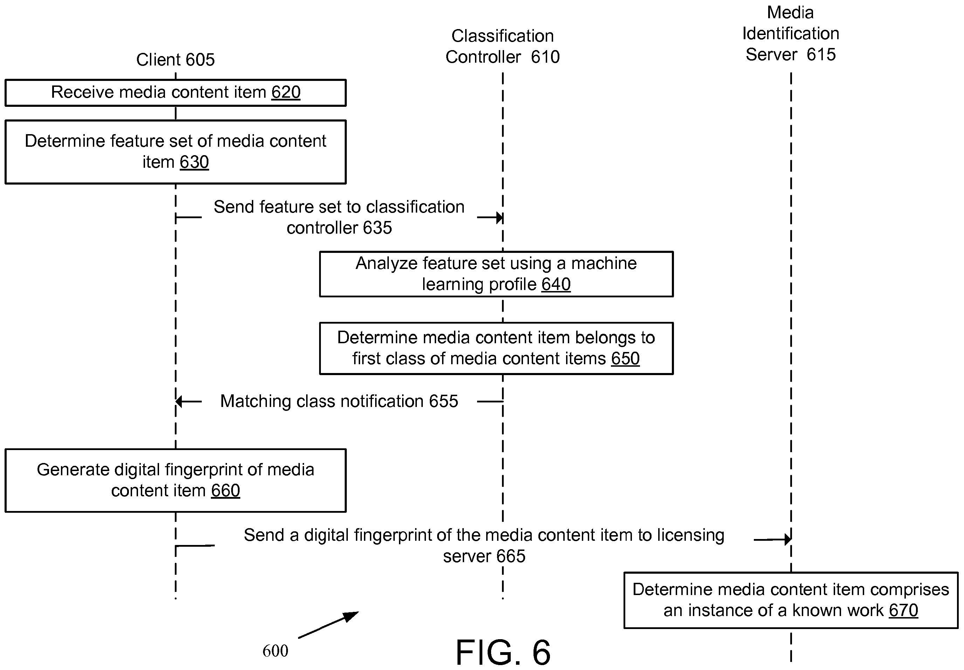

**FIG. 6** is a sequence diagram illustrating a sequence 600 of communications and operations for determining when a media content item matches a known work, according to an embodiment. The sequence 600 may be performed by processing logic at one or more of a client 605, a classification controller 610, and a media identification service 615 that each comprise hardware (e.g., circuitry, dedicated logic, programmable logic, microcode, etc.), software (e.g., instructions run on a processor to perform hardware simulation), firmware, or a combination thereof. The processing logics are configured to communicate by transmitting and receiving signals (i.e., network packets) to identify if a received media content item comprises an instance of a known work.

Referring to **FIG. 6**, sequence 600 begins at the client 605. In one embodiment, the client 605 is a front end application or server that runs on a front end device (e.g., computing devices 101A-B of **FIG. 1**) residing at a client side (e.g., hosted by a computing device that also hosts a media context sharing platform that includes user generated content). Sequence 600 may also include a classification controller 610 at a front end device or a back end device (e.g., computing device 101B or server computing device 150 of **FIG. 1**). Sequence 600 may also include a media identification server 615 at a back end device (e.g., server computing device 150 of **FIG. 1**). In one embodiment, client 605 and classification controller 610 both reside on the front end device. This may reduce a network bandwidth utilization associated with communicating across a network. Alternatively, client 605 and classification controller may reside on separate devices and may communicate over a network such as the Internet.

At block 620, a media content item is received. In one embodiment, the media content item is received from a local storage (e.g., storage 111B or 112B) or from a remote storage (e.g., storage 140). The media content item may be user generated content that has been uploaded to the client by a user.

A block 630, a feature set of the media content item is determined. In an embodiment, the feature set that is identified is a set of features that will be used for classification of the media content item using a media classification profile that has been generated using machine learning. In one embodiment, the feature set is based on multiple features of the media content item over a portion or segment of the media content item. In one embodiment, the segment of the media content item is 20 seconds long. The feature set may include features sampled from the segment every 10 milliseconds. At each interval, 52 different features are sampled. Accordingly, the feature set may include many different features. Once determined, the feature set is sent to classification controller at operation 635. Transmitting only a feature set instead of the segment of the media content item may reduce the bandwidth utilization of a network.

At block 640, the feature set is analyzed using a machine learning profile (also referred to as a media classification profile). In an embodiment, the machine learning profile includes a first machine learning model trained to identify a first classification of media content items and a second machine learning model trained to identify a second classification of media content items. For example, the first machine learning model may identify a first classification of media content items comprising music and the second machine learning model may identify a second classification of media content items not comprising music. Alternatively, the first machine learning model may identify a first classification of media content item comprising a first genre of music or video media content items and the second machine learning model may identify a second classification of media content items comprising a second genre of music or video media content items. Alternatively, the first machine learning model may identify a first classification of video and/or audio media content items having specific types of alterations and the second machine learning model may identify a second classification of video and/or audio media content items that are unaltered.

At block 650, the media content item is determined to belong to a first class of media content items. In an embodiment, the media content item is an audio media content item and the first class of media content items is a classification of media content items which comprise music. In another embodiment, the media content item is an audio or video media content item and the first class of media content items is a classification of media content items which comprise audio of a first genre or video of a first type. For example, the first genre of audio may include rock music having drums, bass, electric guitar, and vocals or classical music having a clear melody featuring a piano. The first genre of video may include action scenes heavily featuring rapidly moving motion vectors from frame to frame (e.g., videos with car chases) and/or many scene changes. The first genre of video may alternatively include nature scenes featuring few moving motion vectors and a consistent scene of a landscape, water, or sky. The first genre of video may alternatively include lectures and/or talking heads.

In one embodiment, the classification controller 610 transmits a notification of a matching class back to the client device 605 at operation 655. In an embodiment, the notification may include an identification of the classification matched or an identification of a media identification server related to the classification matched. For example, the client 605 may receive a notification that the media content item matched a classification of audio comprising music. Alternatively, the client 605 may receive a notification that the media content item matched a classification of audio falling into a first genre or a classification of video falling into a first genre.

The client 605 may then use the identification of the classification matched to determine which media identification server 615 is associated with media content items of the matching classification. For example, there may only be a single media identification server 615 associated with audio comprising music or there may be a plurality of media identification servers 615 each associated with a specific classification of audio or video media content items. A notification of a matching classification may be used to identify which media identification server to use for identifying the media content item. This identification may be performed using a lookup of classifications to media identification servers or the notification itself may include the network address associated with the associated media identification server. Determining which media identification server to use for identification of the media content item may provide an overall reduction of bandwidth consumption or processing resources utilization. For example, determining that an audio media content item belongs to a classification not comprising music would terminate the execution of sequence 600 in some embodiments, saving all bandwidth and processing resources associated with determining that there is no match in a licensing server for media content items comprising music. Determining that an audio or video media content item belongs to a classification associated with a first genre would allow for the media content item to be provided to a licensing server dedicated to the associated genre, saving processing resources associated with comparing the media content item to known works which are classified to non-identified genres.

In one embodiment, at block 660 the client 605 generates a digital fingerprint of the media content item. The digital fingerprint may be generated from a segment of the media content item. The segment of the media content item may be the same segment used for classification or may be a different segment. The digital fingerprint may be different from the feature set generated at block 630 in embodiments.

At operation 665, the digital fingerprint of the media content item may be sent to the licensing server or the media identification server. Alternatively, a portion or segment of the media content item may be sent to the media identification server at operation 665. The media identification server may then use the digital fingerprint to identify the media content item or may generate a digital fingerprint and use the digital fingerprint to identify the media content item.

At block 670, the media identification server compares the digital fingerprint of the media content item to digital fingerprints of many known works. For each known work, many digital fingerprints may be stored in a database. These digital fingerprints may be for overlapping segments of the known works. For example, a first digital fingerprint of a known work may be for seconds 1-10 of the work, a second digital fingerprint may be for seconds 2-11 of the work, and so on. The digital fingerprint may be compared against the digital fingerprints of the known works until a match is found or until the digital fingerprint has been compared against the digital fingerprints of all of the known works in the database.

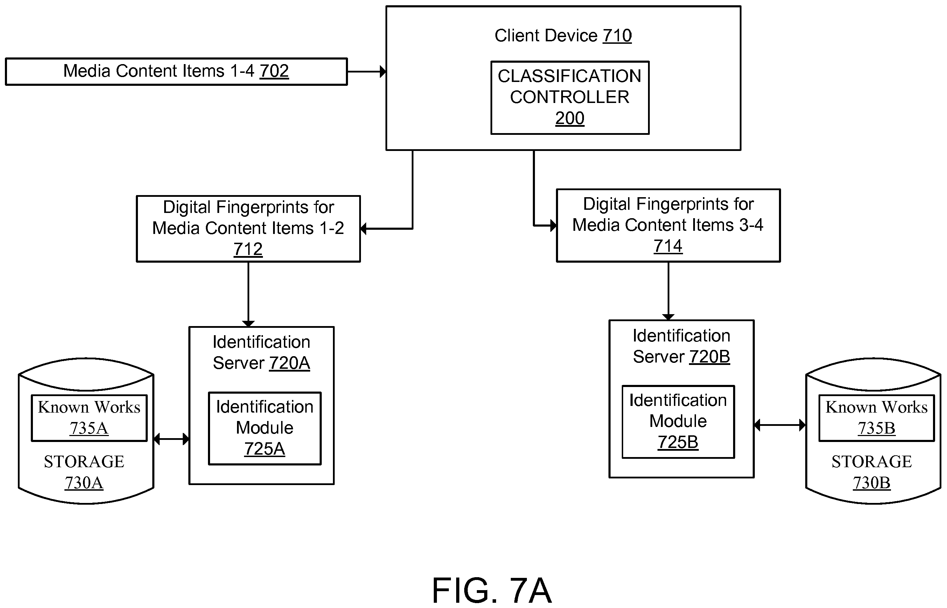

FIG. **7A** is a block diagram illustrating a classification of a media content item, according to an embodiment. In one embodiment, a client device 710 (e.g., a computing device 101A-B of FIG. 1) receives a plurality of media content items 702 (e.g., media content items 1-4). In an embodiment, client device 710 may comprise classification controller 200. Media content items 702 may be processed by classification controller 200 to determine a classification of the media content items. A machine learning profile comprising one or more machine learning models for determining a classification of media content items may be used by classification controller 200 for performing such classification. Media content items 1-2 may be determined to belong to classifications of audio which comprise music and media content items 3-4 may be determined to belong to classifications of audio which do not comprise music, for example. Alternatively, media content items 1-2 may be altered media content items and media content items 3-4 may be unaltered media content items.

Classification controller 200 or another logic at client device may generate digital fingerprints of each of media content items 1-4. The digital fingerprints for media content items 1-2 712 may be sent to a first identification server 720A. The digital fingerprints for media content items 3-4 714 may be sent to a second identification server 720B. Identification server 720A may identify media content items belongs to a first class of media content items (e.g., media content items containing music), and identification server 720B may identify media content items belonging to a second class of media content items (e.g., media content items that do not contain music).

In one embodiment, identification module 725A may include processing logic for comparison of digital fingerprints of media content items to digital fingerprints of known works 735A stored in storage 730A. Storage 730A may comprise known works which are music that has been registered with an identification service that includes identification server 720A.

In one embodiment, identification module 725B may include processing logic for comparison of digital fingerprints of media content items to digital fingerprints of non-music known works 730B stored in storage 730B. The non-music known works 730B may include, for example, comedy albums, dialogue from a movie, and so on.

In one embodiment, identification server 720A and identification server 720B include digital fingerprints for the same known works (e.g., known works 735A may match known works 735B). However, identification module 725A may perform a more detailed and resource expensive identification process than identification module 725B. For example, the more detailed and resource expensive identification process may be performed on media content items that have been classified as altered media content items. A less detailed and resource expensive identification process may be performed on media content items that have not been altered. In one embodiment, digital fingerprints 712 and digital fingerprints 714 are sent to the same identification server, and that identification server includes both identification module 725A and identification module 725B.

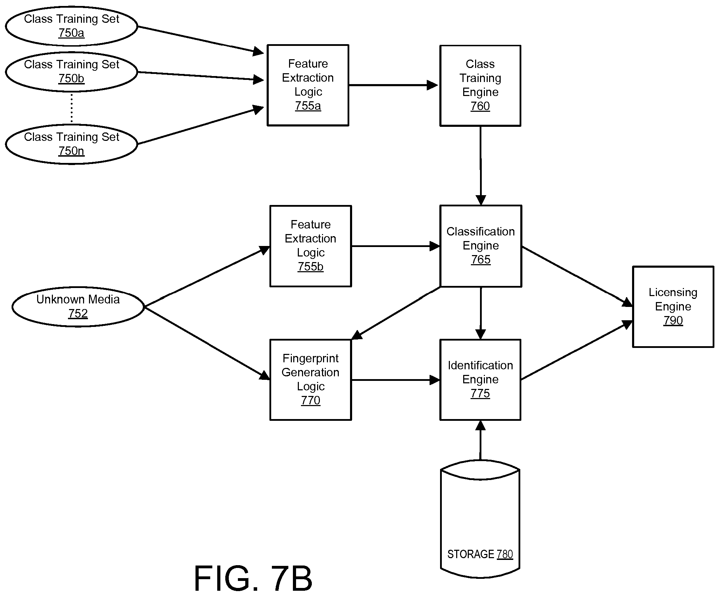

**FIG. 7B** is a block diagram illustrating a system for generating a media classification profile and applying the media classification profile to an unknown media content item for determining when the media content item matches a known work, according to an embodiment. A plurality of class training sets 750a-n which are curated from known works with identified classifications are provided to a class training engine 760. For example, a licensing database may comprise hundreds of thousands of known works of audio or video media content items which have been classified. Class training sets 750a-n may be provided to class training engine 760 one at a time, in groups, or all at once.

In one embodiment, feature extraction logic 755a performs feature extraction on each media content item in the class training sets 750a-n before these media content items are used by class training engine 760 to generate the machine learning profiles. Class training engine 760 may generate the machine learning profiles based on feature sets extracted at feature extraction logic 755a. Feature extraction logic 755a may extract a set of features from the class training set 750a-n. The set of features may be identified in advance or may include all features (loudness, pitch, brightness, spectral bandwidth, energy in one or more spectral bands, spectral steadiness, Mel-frequency cepstral coefficients (MFCCs), spectral flatness, perceptual spread, spectral roll-off, spectral decrease, spectral shape statistics, spectral slope, Fast Fourier Transforms (FFTs), derivatives of these features, second derivatives of these features, etc.) which may be extracted. In an embodiment, feature extraction logic 755a may extract features according to what type of media content items are included in class training sets 750a-n (e.g., image, audio, video). The extracted features may be provided to class training engine 760 for analysis using one or more machine learning techniques (e.g., Gaussian mixture model). Some examples of machine learning techniques for illustrative purposes only and not falling within the scope of the claims include, support vector machine, cluster analysis, neural network, regression analysis, classification analysis, anomaly analysis, etc.

Class training engine 760 then performs machine learning operations to generate a machine learning profile from one or more of the class training sets 750a-n. In one embodiment, class training engine 760 performs k-means clustering to find initial clusters from a class training set (e.g., from a training set of music media content items). One or more Gaussian mixture models containing one or more Gaussians are then generated based on the clusters. Expectation maximization is then performed to refine the one or more Gaussian mixture models. In one embodiment, a Gaussian mixture model containing multiple Gaussians is used in a single machine learning model (which may be a stochastic model) that can be used to identify a likelihood that a media content item belongs to a particular class. For example, for a class training set 750a identifying audio media content items comprising music or not comprising music, class training engine 760 may generate a Gaussian mixture model utilizing 16-128 Gaussians and a set of fifty-two features. Different Gaussian mixture models may be generated from different class training sets 750a-n, where each Gaussian mixture model is associated with a particular classification. Experimentation has shown that the set of fifty-two features generates the highest expectation maximum in some instances. Multiple different machine learning models may then be incorporated into a single machine learning profile (e.g., that can categorize a media content item as belonging to a particular class within a group of possible classes, where each possible class may have its own machine learning model).

Class training engine 760 may load the machine learning profile into classification engine 765 and configure feature extraction logic 755b to extract the features of the identified feature set used by the machine learning profile.

Unknown media 752 may be provided to an identification service, which may also be a copyright compliance service and/or a licensing service. Feature extraction logic 755b may perform feature extraction according to a machine learning profile loaded in the classification engine 765. In an embodiment, feature extraction logic 755b may be configured to extract the fifty-two features identified in the machine learning profile loaded in the classification engine 765. Other numbers of features may alternatively be extracted. The set of extracted features may be provided to the classification engine 765 and analyzed using the machine learning profile loaded therein. In an embodiment, the machine learning profile loaded in classification engine 765 may determine if the unknown media 752 comprises music or does not comprise music. Determination that unknown media 752 comprises music may be performed by providing the set of features from feature extraction logic 755b as an input to the machine learning models of the machine learning profile loaded into classification engine 765. In an example, the Gaussian mixture models of the machine learning profile may receive the input feature set of features and provide a vector output with likelihood values identifying a classification of the unknown media 752. Classification engine 765 may determine whether the unknown media 752 has a particular classification based on the output vectors generated by one or more machine learning models, where each machine learning model is associated with a particular classification. In one embodiment, the unknown media 752 is classified according to the output vector that indicates a highest likelihood of a match. In one embodiment, the output vectors are adjusted using a softmax function (also referred to as a normalized exponential function). This transforms the output vectors into zero to one ranges. Accordingly, the output vector with the highest value (closest to 1) may be selected, and the unknown media may be classified according to the class associated with that output vector.

Upon determining that unknown media 752 comprises music, classification engine 765 may notify fingerprint generation logic 770 to generate a digital fingerprint of at least a segment of the unknown media 752. Identification engine 775 receives the digital fingerprint of unknown media 752 from fingerprint extraction logic 770 and may additionally receive a notification of a classification of unknown media 752 from classification engine 765. In an embodiment, identification engine 775 also receives an address of a licensing server which identifies known works associated with the classification of unknown media 752. In another embodiment, identification engine 775 may perform a lookup of an address of a licensing server that identifies known works associated with the classification of unknown media 752 using the provided classification. Identification engine 775 compares the received digital fingerprint to digital fingerprints of known works, which may be stored in storage 780. Identification engine 775 may provide a notification to licensing engine 790 identifying a known work matching unknown media 752, which is known at this point.

Licensing engine 790 may also receive a notification from classification engine 765 identifying a ratio of segments of unknown media 752 which comprise music to segments of unknown media 752 which do not comprise music. In an embodiment, licensing engine 790 assigns a licensing rate to unknown media 752 based upon the one or more known works identified within unknown media 752 and the ratio of segments of unknown media 752 which comprise music to segments of unknown media 752 which do not comprise music. In an example, an unknown media 752 which has a higher ratio of segments comprising music to segments not comprising music will receive a higher licensing rate.

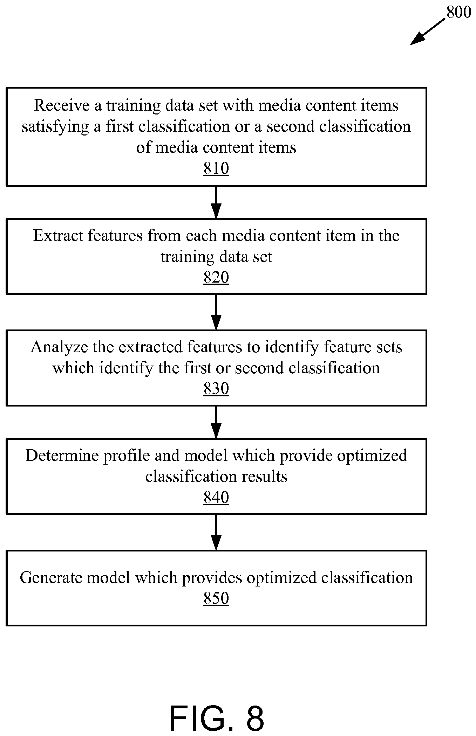

FIG. 8 is a flow diagram illustrating the generation of a machine learning profile for media content item classification, according to an embodiment. At block 810 of method 800, processing logic receives a training data set with media content items satisfying a first classification of media content items and an additional training data set of media content items satisfying a second classification of media content items. In an embodiment, the training data set includes a first plurality of media content items which have been classified to a first classification as comprising music and a second plurality of media content items which have been classified to a second classification as not comprising music.

Features are extracted from each media content item in the training data sets at block 820. The sets of features extracted includes characteristics of the media content item (e.g., loudness, pitch, brightness, spectral bandwidth, energy in one or more spectral bands, spectral steadiness, Mel-frequency cepstral coefficients (MFCCs), spectral flatness, perceptual spread, spectral roll-off, spectral decrease, spectral shape statistics, spectral slope, Fast Fourier Transforms (FFTs), derivatives of these features, second derivatives of these features, etc.) which may be extracted. The extracted features may be predefined or may be a set of all features.

In one embodiment, the extracted features for an audio media content item include a loudness envelope for each moment in time (e.g., at every 10 milliseconds, every 100 milliseconds, etc.), pitch information at each moment in time, and so on. Some extracted features may be in the spectral domain or frequency domain. A fast Fourier transform (FFT) may be performed to convert time series data of the media content item into the frequency domain. In the frequency domain, features such as brightness (e.g., whether treble or bass), bandwidth breadth, and so on may be determined. In one embodiment, features are determined for 10 different frequency bands. For example, an energy level at each of the frequency bands may be determined for each moment in time. Another feature that may be extracted is spectrum stability. Music tends to have a steady spectrum, whereas spoken word tends to have pitches that vary widely with time. In one embodiment, 52 distinct features are measured at each tenth of a second. An example feature set might include loudness, pitch, brightness (spectral centroid), spectral bandwidth, energy in spectral bands (e.g., in 10 different spectral bands), spectral steadiness, and MFCCs.

Unlike audio, video is divided into frames. Accordingly, for video media content items features may be determined per frame. In one embodiment, the extracted features for a video media content item are based on features such as intensity, moving objects (e.g., objects that move between frames), and other image based features. In one embodiment, each frame is divided into a grid, and a bit pattern is computed based on the grid. Processing logic examines neighboring cells in the grid to determine if neighboring cells are brighter or darker than a given cell. Vectors may be computed for each cell that indicates the change in intensity to adjacent cells. A vector grid may be generated for each frame, and vector grids of adjacent in time frames may be compared. A gray scale difference between the vector grids may be determined to identify locations in the grid where objects have moved. Movement may be placed into quadrants. Accordingly, a feature that may be determined is motion between frames (e.g., using pixel values over an interval), which may include area that the motion has occurred in the screen, an amount of motion, and so on. Additionally, static features may be determined for each frame (e.g., may be actual pixel values in a frame).

In one embodiment, video is down sampled for feature extraction. For example, an original resolution may be down sampled to a 100x100 pixel resolution in embodiments. The frame rate may also be down sampled (e.g., from about 60 frames per second to about 5 frames per second).

It can be helpful to normalize the features by measuring the average and standard deviation of each feature over a large number of media content items in a training data set. For each media content item in the training data set, the mean of each feature may then be subtracted from the feature value for the media content item and the resulting value may be divided by the standard deviation. These modified feature sets of the media content items in the training data set may then be used for generating a machine learning model.

The extracted features may be analyzed to identify feature sets which identify the first or second classification at block 830. A block 840, the profile and model which provide optimized classification results are determined. For example, for a training set identifying audio media content items comprising music or not comprising music, a Gaussian mixture model that includes a set of fifty-two features generates the highest expectation maximum and is determined to be the optimized media classification model (machine learning model). The received training set may be proportioned into an input training set and a testing training set. For example, one thousand classified media content items may be proportioned as an eight hundred input training data set and a two hundred input testing training set.

At block 850, the machine learning model that provides the optimized classification is generated. In an embodiment, a machine learning profile is generated which includes the machine learning model which generated the optimal results, the feature set which generated the optimal results, and/or any other associated metadata. The other associated metadata of the machine learning profile may identify the type of threshold to apply to a normalized output vector, may identify the value of a single threshold that may be met or provide a combination of thresholds that must be met, may identify a range of values each element of the output vector may have, and/or may include any other data for applying or interpreting the output of the machine learning model.

In the case of a machine learning model that classifies altered video, classification models may be trained using a first training data set of commercial videos and a second training data set of videos that have been altered. The altered video may contain higher spatial frequencies, and the frame outside the video may either be still, slowly changing, or rapidly changing. Since the two cases are quite different statistically, the machine learning models would be able to distinguish between altered and unaltered video.

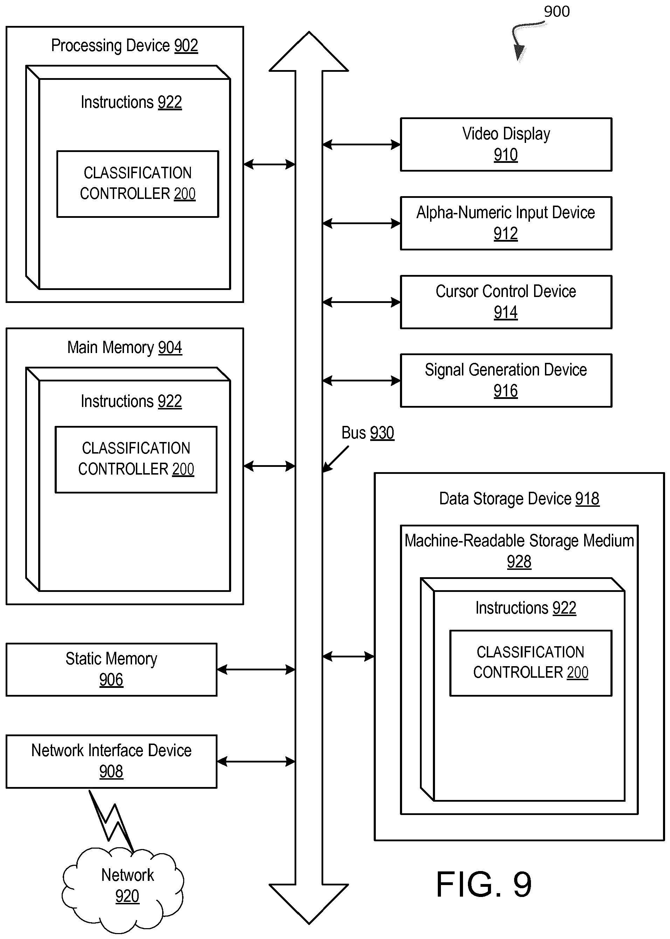

**FIG. 9** illustrates a diagrammatic representation of a machine in the exemplary form of a computing device 900 within which a set of instructions, for causing the machine to perform any one or more of the methodologies discussed herein, may be executed. The computing device 900 may be in the form of a computing device within which a set of instructions, for causing the machine to perform any one or more of the methodologies discussed herein, may be executed. In alternative embodiments, the machine may be connected (e.g., networked) to other machines in a LAN, an intranet, an extranet, or the Internet. The machine may operate in the capacity of a server machine in client-server network environment. The machine may be a personal computer (PC), a set-top box (STB), a server computing device, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. In one embodiment, computing device 900 may represent computing devices 101A-B, server computing device 150 and/or client device 710, as shown in **FIGS. 1** and **7A**, respectively.

The computing device 900 includes a processing device (processor) 902, a main memory 904 (e.g., read-only memory (ROM), flash memory, dynamic random access memory (DRAM) such as synchronous DRAM (SDRAM)), a static memory 906 (e.g., flash memory, static random access memory (SRAM)), and a data storage device 918, which communicate with each other via a bus 930.

Processing device 902 represents one or more general-purpose processing devices such as a microprocessor, central processing unit, or the like. More particularly, the processing device 902 may be a complex instruction set computing (CISC) microprocessor, reduced instruction set computing (RISC) microprocessor, very long instruction word (VLIW) microprocessor, or a processor implementing other instruction sets or processors implementing a combination of instruction sets. The processing device 902 may also be one or more special-purpose processing devices such as an application specific integrated circuit (ASIC), a field programmable gate array (FPGA), a digital signal processor (DSP), network processor, or the like. The processing device 902 is configured to execute the classification controller 200 for performing the operations and steps discussed herein.

The computing device 900 may further include a network interface device 908. The computing device 900 also may include a video display unit 910 (e.g., a liquid crystal display (LCD) or a cathode ray tube (CRT)), an alphanumeric input device 912 (e.g., a keyboard), a cursor control device 914 (e.g., a mouse), and a signal generation device 916 (e.g., a speaker).

The data storage device 918 may include a computer-readable medium 928 on which is stored one or more sets of instructions 922 (e.g., instructions of classification controller 200) embodying any one or more of the methodologies or functions described herein. The instructions 922 may also reside, completely or at least partially, within the main memory 904 and/or within processing logic 926 of the processing device 902 during execution thereof by the computer system 900, the main memory 904 and the processing device 902 also constituting computer-readable media. The instructions may further be transmitted or received over a network 920 via the network interface device 908.

While the computer-readable storage medium 928 is shown in an exemplary embodiment to be a single medium, the term "computer-readable storage medium" should be taken to include a single medium or multiple media (e.g., a centralized or distributed database, and/or associated caches and servers) that store the one or more sets of instructions. The term "computer-readable storage medium" shall also be taken to include any medium that is capable of storing, encoding or carrying a set of instructions for execution by the machine and that cause the machine to perform any one or more of the methodologies of the present invention. The term "computer-readable storage medium" shall accordingly be taken to include, but not be limited to, solid-state memories, optical media, and magnetic media.

The preceding description sets forth numerous specific details such as examples of specific systems, components, methods, and so forth, in order to provide a good understanding of several embodiments of the present invention. It will be apparent to one skilled in the art, however, that at least some embodiments of the present invention may be practiced without these specific details. In other instances, well-known components or methods are not described in detail or are presented in simple block diagram format in order to avoid unnecessarily obscuring the present invention. Thus, the specific details set forth are merely exemplary. Particular implementations may vary from these exemplary details and still be contemplated to be within the scope of the present invention.

In the above description, numerous details are set forth. It will be apparent, however, to one of ordinary skill in the art having the benefit of this disclosure, that embodiments of the invention may be practiced without these specific details. In some instances, well-known structures and devices are shown in block diagram form, rather than in detail, in order to avoid obscuring the description.

Some portions of the detailed description are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise as apparent from the above discussion, it is appreciated that throughout the description, discussions utilizing terms such as "determining", "identifying", "adding", "selecting" or the like, refer to the actions and processes of a computer system, or similar electronic computing device, that manipulates and transforms data represented as physical (e.g., electronic) quantities within the computer system's registers and memories into other data similarly represented as physical quantities within the computer system memories or registers or other such information storage, transmission or display devices.

Embodiments of the invention also relate to an apparatus for performing the operations herein. This apparatus may be specially constructed for the required purposes, or it may comprise a general purpose computer selectively activated or reconfigured by a computer program stored in the computer. Such a computer program may be stored in a computer readable storage medium, such as, but not limited to, any type of disk including floppy disks, optical disks, CD-ROMs, and magnetic-optical disks, read-only memories (ROMs), random access memories (RAMs), EPROMs, EEPROMs, magnetic or optical cards, or any type of media suitable for storing electronic instructions.

The algorithms and displays presented herein are not inherently related to any particular computer or other apparatus. Various general purpose systems may be used with programs in accordance with the teachings herein, or it may prove convenient to construct a more specialized apparatus to perform the required method steps. In addition, embodiments of the present invention are not described with reference to any particular programming language. It will be appreciated that a variety of programming languages may be used to implement the teachings of the invention as described herein.

It is to be understood that the above description is intended to be illustrative, and not restrictive. Many other embodiments will be apparent to those of skill in the art upon reading and understanding the above description. The scope of the invention should, therefore, be determined with reference to the appended claims.

## Claims

1. A method (300) comprising:
receiving (302) a media content item by a first processing device, wherein the media content item comprises audio;
determining (304), by the first processing device, a set of features of the media content item, wherein said features comprise a plurality of features extracted from the audio of the media content item over a time interval of a tenth of a second into the frequency domain, wherein the plurality of features in the frequency domain are determined by performing a fast Fourier transform to transform the audio at the time interval into the frequency domain;
analyzing (306), by the first processing device, the set of features extracted from the audio media content over the time interval using a first media classification profile (235) comprising a first Gaussian mixture model and a second Gaussian mixture model, wherein the first and second Gaussian mixture models use fifty-two features extracted from the audio media content every tenth of a second to determine a first probability of the media content item belonging to a first class of media content items representative of music and a second probability of the media content item belonging to for a second class of media content items representative of a lack of music content and thereby generate an estimate of how likely the received media content item matches said first class or said second class, wherein if the probability that a media content item belongs to a particular class exceeds or meets a probability threshold of the first media classification profile, then it is determined that the media content item is a member of that particular class;
determining (308) whether the media content item belongs to the first class of media content items or the second class of the media content items based on a result of the analyzing;
determining whether to perform identification of the media content item based on whether the media content item belongs to the first class of media content items or the second class of media content items;
responsive to determining that the media content item belongs to the first class, sending (312) at least one of a) a portion of the media content item or b) a digital fingerprint of the media content item to a second processing device for further processing by an identification service; and
responsive to determining that the media content item belongs to the second class, bypassing (310) further processing of the media content item without sending the media content item to the second processing device to reduce bandwidth and processor utilization of the identification service.

2. The method (300) of claim 1, further comprising:
dividing the media content item into a plurality of segments; and
sending at least one of a) one or more of the plurality of segments of the media content item or b) a corresponding digital fingerprint of one or more of the plurality of segments of the media content item to the second processing device.

3. The method (300) of claim 1, further comprising performing the following responsive to determining that the media content item belongs to the first class of media content items:
performing (314) an analysis of the set of features using a second media classification profile comprising a third Gaussian mixture model and a fourth Gaussian mixture model, wherein the third and fourth Gaussian mixture models use the set of features extracted from the audio media content over the time interval to determine a first probability of the media content item belonging to a first sub-class of media content items and a second probability of the media content item belonging to a second sub-class of media content items; and
determining (316) whether the media content item belongs to the first sub-class of media content items or the second sub-class of the media content items based on a result of the analysis.

4. The method (300) of claim 3, wherein the first sub-class of media content items is for a first music genre and the second sub-class of media content items is for a second music genre.

5. The method (300) of claim 1, wherein the first media classification profile (235) is trained using expectation maximization initialized by k-means clustering.

6. The method (300) of any of the preceding claims, wherein the set of features include at least one of loudness, pitch, brightness, spectral bandwidth, energy in one or more spectral bands, spectral steadiness, or Mel-frequency cepstral coefficients (MFCCs).

7. The method (300) of any of the preceding claims, wherein:
the media content item further comprises video;
the first class of the media content items is further for media content items comprising a first video class; and
the second class of the media content items is further for media content items comprising a second video class.

8. The method (300) of any of the preceding claims, wherein the first class of media content items is for media content items containing one or more alterations and the second class of media content items is for media content items not containing the one or more alterations, wherein the one or more alterations comprise one or more characteristics indicative of an altered media content item to avoid detection by an identification service.

9. The method (300) of claim 8, wherein at least one of the following is true:
a) the media content item further comprises video, wherein the one or more alterations comprise a non-static border at a periphery of the video; or
b) the media content item comprises audio, wherein the one or more alterations comprise at least one of an increase in a playback speed of the audio or a reverse polarity of a stereo channel.

10. The method of any of the preceding claims, further comprising performing the following responsive to determining that the media content item belongs to the first class:
comparing (322), by the second processing device, the digital fingerprint to a plurality of additional digital fingerprints of a plurality of known works;
identifying (324) a match between the digital fingerprint and an additional digital fingerprint of the plurality of additional digital fingerprints, wherein the additional digital fingerprint is for a segment of a known work of the plurality of known works; and
determining (326) that the media content item comprises an instance of the known work.

11. The method (300) of claim 10, wherein:
the first processing device is associated with a first entity that hosts user generated content;
the media content item comprises user generated content uploaded to the first entity; and
the second processing device is associated with a second entity comprising a database of the plurality of known works.

12. A computer readable medium comprising instructions that, when executed by the first processing device and the second processing device, cause the first processing device and the second processing device to perform the method of one or more of claims 1-11.

13. A system comprising:
a) a memory comprising instructions;
b) the first processing device as defined in any of claims 1-11 operatively coupled to the memory;
c) the second processing device as defined in any of claims 1-11 operatively coupled to the memory;
wherein the first processing device and the second processing device perform the method of one or more of claims 1-11 responsive to executing the instructions.

## Patentansprüche

1. Verfahren (300), das Folgendes beinhaltet:
Empfangen (302) eines Medieninhaltselements durch ein erstes Verarbeitungsgerät, wobei das Medieninhaltselement Audio umfasst;
Bestimmen (304), durch das erste Verarbeitungsgerät, eines Satzes von Merkmalen des Medieninhaltselements, wobei die genannten Merkmale mehrere aus dem Audio des Medieninhaltselements über ein Zeitintervall von einer Zehntelsekunde in die Frequenzdomäne extrahierte Merkmale umfassen, wobei die mehreren Merkmale in der Frequenzdomäne durch Ausführen einer schnellen Fourier-Transformation zum Transformieren des Audios in dem Zeitintervall in die Frequenzdomäne bestimmt werden;
Analysieren (306), durch das erste Verarbeitungsgerät, des Satzes von aus dem Audiomedieninhalt über das Zeitintervall extrahierten Merkmalen anhand eines ersten Medienklassifikationsprofils (235), das ein erstes Gaußsches Mischmodell und ein zweites Gaußsches Mischmodell umfasst, wobei das erste und zweite Gaußsche Mischmodell zweiundfünfzig jede Zehntelsekunde aus dem Audiomedieninhalt extrahierte Merkmale verwenden, um eine erste Wahrscheinlichkeit, dass das Medieninhaltselement zu einer ersten Klasse von Medieninhaltselementen gehört, die für Musik repräsentativ sind, und eine zweite Wahrscheinlichkeit zu bestimmen, dass das Medieninhaltselement zu einer zweiten Klasse von Medieninhaltselementen gehört, die für einen Mangel an Musikinhalt repräsentativ sind, und dadurch eine Abschätzung dafür zu erzeugen, wie wahrscheinlich es ist, dass das empfangene Medieninhaltselement mit der genannten ersten Klasse oder der genannten zweiten Klasse übereinstimmt, wobei, wenn die Wahrscheinlichkeit, dass ein Medieninhaltselement zu einer bestimmten Klasse gehört, einen Wahrscheinlichkeitsschwellenwert des ersten Medienklassifikationsprofils übersteigt oder erreicht, festgestellt wird, dass das Medieninhaltselement ein Mitglied dieser bestimmten Klasse ist;
Feststellen (308), ob das Medieninhaltselement zur ersten Klasse von Medieninhaltselementen oder zur zweiten Klasse von Medieninhaltselementen gehört, auf der Basis eines Ergebnisses der Analyse;
Feststellen, ob eine Identifizierung des Medieninhaltselements durchgeführt werden soll, auf der Basis davon, ob das Medieninhaltselement zur ersten Klasse von Medieninhaltselementen oder zur zweiten Klasse von Medieninhaltselementen gehört;
Senden (312), als Reaktion auf die Feststellung, dass das Medieninhaltselement zur ersten Klasse gehört, a) eines Teils des Medieninhaltselements und/oder b) eines digitalen Fingerabdrucks des Medieninhaltselements zu einem zweiten Verarbeitungsgerät zur Weiterverarbeitung durch einen Identifikationsdienst; und
Umgehen (310), als Reaktion auf die Feststellung, dass das Medieninhaltselement zur zweiten Klasse gehört, der Weiterverarbeitung des Medieninhaltselements, ohne das Medieninhaltselement zum zweiten Verarbeitungsgerät zu senden, um die Bandbreiten-und Prozessornutzung des Identifikationsdienstes zu reduzieren.

2. Verfahren (300) nach Anspruch 1, das ferner Folgendes beinhaltet:
Unterteilen des Medieninhalts in eine Mehrzahl von Segmenten; und
Senden von a) einem oder mehreren aus der Mehrzahl von Segmenten des Medieninhaltselements und/oder b) einem entsprechenden digitalen Fingerabdruck von einem oder mehreren aus der Mehrzahl von Segmenten des Medieninhaltselements zum zweiten Verarbeitungsgerät.

3. Verfahren (300) nach Anspruch 1, das ferner das Durchführen der folgenden Schritte als Reaktion auf die Feststellung beinhaltet, dass das Medieninhaltselement zur ersten Klasse von Medieninhaltselementen gehört:
Durchführen (314) einer Analyse des Satzes von Merkmalen anhand eines zweiten Medienklassifikationsprofils, das ein drittes Gaußsches Mischmodell und ein viertes Gaußsches Mischmodell umfasst, wobei das dritte und das vierte Gaußsche Mischungsmodell den Satz von Merkmalen verwenden, die aus dem Audiomedieninhalt über das Zeitintervall extrahiert wurden, um eine erste Wahrscheinlichkeit, dass das Medieninhaltselement zu einer ersten Subklasse von Medieninhaltselementen gehört, und eine zweite Wahrscheinlichkeit zu bestimmen, dass das Medieninhaltselement zu einer zweiten Subklasse von Medieninhaltselementen gehört; und
Feststellen (316), ob das Medieninhaltselement zur ersten Subklasse von Medieninhaltselementen oder zur zweiten Subklasse von Medieninhaltselementen gehört, auf der Basis eines Ergebnisses der Analyse.

4. Verfahren (300) nach Anspruch 3, wobei die erste Subklasse von Medieninhaltselementen für ein erstes Musikgenre bestimmt ist und die zweite Subklasse von Medieninhaltselementen für ein zweites Musikgenre bestimmt ist.

5. Verfahren (300) nach Anspruch 1, wobei das erste Medienklassifikationsprofil (235) mittels Erwartungsmaximierung, initialisiert durch k-means Clustering, trainiert wird.

6. Verfahren (300) nach einem der vorherigen Ansprüche, wobei der Satz von Merkmalen mindestens eines von Lautheit, Tonhöhe, Helligkeit, spektraler Bandbreite, Energie in einem oder mehreren Spektralbändern, spektraler Stetigkeit oder Mel-Frequenz-Cepstral-Koeffizienten (MFCCs) umfasst.

7. Verfahren (300) nach einem der vorherigen Ansprüche, wobei:
das Medieninhaltselement ferner Video umfasst;
die erste Klasse der Medieninhaltselemente ferner für Medieninhaltselemente bestimmt ist, die eine erste Videoklasse umfassen; und
die zweite Klasse der Medieninhaltselemente ferner für Medieninhaltselemente bestimmt ist, die eine zweite Videoklasse umfassen.

8. Verfahren (300) nach einem der vorherigen Ansprüche, wobei die erste Klasse von Medieninhaltselementen für Medieninhaltselemente bestimmt ist, die eine oder mehrere Änderungen enthalten, und die zweite Klasse von Medieninhaltselementen für Medieninhaltselemente bestimmt ist, die die eine oder mehreren Änderungen nicht enthalten, wobei die eine oder mehreren Änderungen ein oder mehrere Charakteristiken umfassen, die ein geändertes Medieninhaltselement anzeigen, um eine Erkennung durch einen Identifikationsdienst zu vermeiden.

9. Verfahren (300) nach Anspruch 8, wobei Folgendes gilt:
a) das Medieninhaltselement ferner Video umfasst, wobei die eine oder mehreren Änderungen einen nicht statischen Rand an einer Peripherie des Videos umfassen; und/oder
b) das Medieninhaltselement Audio umfasst, wobei die eine oder mehreren Änderungen eine Erhöhung der Abspielgeschwindigkeit des Audios und/oder eine Umpolung eines Stereokanals umfassen.

10. Verfahren nach einem der vorherigen Ansprüche, das ferner das Durchführen der folgenden Schritte als Reaktion auf die Feststellung beinhaltet, dass das Medieninhaltselement zur ersten Klasse gehört:
Vergleichen (322), durch das zweite Verarbeitungsgerät, des digitalen Fingerabdrucks mit mehreren zusätzlichen digitalen Fingerabdrücken von mehreren bekannten Werken;
Identifizieren (324) einer Übereinstimmung zwischen dem digitalen Fingerabdruck und einem zusätzlichen digitalen Fingerabdruck der mehreren zusätzlichen digitalen Fingerabdrücke, wobei der zusätzliche digitale Fingerabdruck für ein Segment eines bekannten Werks von den mehreren bekannten Werken bestimmt ist; und
Feststellen (326), dass das Medieninhaltselement eine Instanz des bekannten Werks umfasst.

11. Verfahren (300) nach Anspruch 10, wobei:
das erste Verarbeitungsgerät mit einer ersten Entität assoziiert ist, die nutzergenerierten Inhalt hostet;
das Medieninhaltselement nutzergenerierten Inhalt umfasst, der auf die erste Entität hochgeladen wurde; und
das zweite Verarbeitungsgerät mit einer zweiten Einheit assoziiert ist, die eine Datenbank der mehreren bekannten Werke umfasst.

12. Computerlesbares Medium, das Befehle enthält, die bei Ausführung durch das erste Verarbeitungsgerät und das zweite Verarbeitungsgerät bewirken, dass das erste Verarbeitungsgerät und das zweite Verarbeitungsgerät das Verfahren nach einem oder mehreren der Ansprüche 1-11 durchführen.

13. System, das Folgendes umfasst:
a) einen Speicher mit Befehlen;
b) das erste Verarbeitungsgerät wie in einem der Ansprüche 1-11 definiert, operativ mit dem Speicher gekoppelt;
c) das zweite Verarbeitungsgerät wie in einem der Ansprüche 1-11 definiert, operativ mit dem Speicher gekoppelt;
wobei das erste Verarbeitungsgerät und das zweite Verarbeitungsgerät das Verfahren nach einem oder mehreren der Ansprüche 1 bis 11 als Reaktion auf die Ausführung der Befehle durchführen.

## Revendications

1. Un procédé (300) comprenant :
la réception (302) d'un élément de contenu multimédia par un premier dispositif de traitement, où l'élément de contenu multimédia comprend un contenu audio,
la détermination (304), par le premier dispositif de traitement, d'un ensemble de caractéristiques de l'élément de contenu multimédia, où lesdites caractéristiques comprennent une pluralité de caractéristiques extraites du contenu audio de l'élément de contenu multimédia sur un intervalle temporel d'un dixième de seconde vers le domaine fréquentiel, où la pluralité de caractéristiques dans le domaine fréquentiel sont déterminées par l'exécution d'une transformée de Fourier rapide de façon à transformer le contenu audio à l'intervalle temporel vers le domaine fréquentiel,
l'analyse (306), par le premier dispositif de traitement, de l'ensemble de caractéristiques extraites du contenu multimédia audio sur l'intervalle temporel au moyen d'un premier profil de classification de supports multimédias (235) comprenant un premier modèle de mélange gaussien et un deuxième modèle de mélange gaussien, où les premier et deuxième modèles de mélange gaussiens utilisent cinquante-deux caractéristiques extraites du contenu multimédia audio à chaque dixième de seconde de façon à déterminer une première probabilité de l'élément de contenu multimédia d'appartenir à une première classe d'éléments de contenus multimédias représentatifs de musique et une deuxième probabilité de l'élément de contenu multimédia d'appartenir à une deuxième classe d'éléments de contenus multimédias représentatifs d'une absence de contenu musical et ainsi de générer une estimation de la probabilité que l'élément de contenu multimédia reçu correspond à ladite première classe ou à ladite deuxième classe, où si la probabilité qu'un élément de contenu multimédia appartienne à une classe particulière atteint ou dépasse un seuil de probabilité du premier profil de classification de supports multimédias, alors il est déterminé que l'élément de contenu multimédia est un membre de cette classe particulière,
la détermination (308) si l'élément de contenu multimédia appartient à la première classe d'éléments de contenus multimédias ou à la deuxième classe d'éléments de contenus multimédias en fonction d'un résultat de l'analyse,
la détermination s'il convient d'exécuter une identification de l'élément de contenu multimédia selon que l'élément de contenu multimédia appartient à la première classe d'éléments de contenus multimédias ou à la deuxième classe d'éléments de contenus multimédias,
en réponse à la détermination que l'élément de contenu multimédia appartient à la première classe, l'envoi (312) d'au moins un élément parmi a) une partie de l'élément de contenu multimédia ou b) une empreinte numérique de l'élément de contenu multimédia à un deuxième dispositif de traitement pour un traitement complémentaire par un service d'identification, et
en réponse à la détermination que l'élément de contenu multimédia appartient à la deuxième classe, le court-circuitage (310) d'un traitement complémentaire de l'élément de contenu multimédia sans l'envoi de l'élément de contenu multimédia au deuxième dispositif de traitement de façon à réduire une utilisation de bande passante et de processeur du service d'identification.

2. Le procédé (300) selon la Revendication 1, comprenant en outre :
la division de l'élément de contenu multimédia en une pluralité de segments, et
l'envoi d'au moins un élément parmi a) un ou plusieurs segments de la pluralité de segments de l'élément de contenu multimédia ou b) une empreinte numérique correspondante d'un ou de plusieurs segments de la pluralité de segments de l'élément de contenu multimédia au deuxième dispositif de traitement.

3. Le procédé (300) selon la Revendication 1, comprenant en outre l'exécution des opérations suivantes en réponse à la détermination que l'élément de contenu multimédia appartient à la première classe d'éléments de contenus multimédias :
l'exécution (314) d'une analyse de l'ensemble de caractéristiques au moyen d'un deuxième profil de classification de supports multimédias comprenant un troisième modèle de mélange gaussien et un quatrième modèle de mélange gaussien, où les troisième et quatrième modèles de mélange gaussiens utilisent l'ensemble de caractéristiques extraites du contenu multimédia audio sur l'intervalle temporel de façon à déterminer une première probabilité de l'élément de contenu multimédia d'appartenir à une première sous-classe d'éléments de contenus multimédias et une deuxième probabilité de l'élément de contenu multimédia d'appartenir à une deuxième sous-classe d'éléments de contenus multimédias, et
la détermination (316) si l'élément de contenu multimédia appartient à la première sous-classe d'éléments de contenus multimédias ou à la deuxième sous-classe d'éléments de contenus multimédias en fonction d'un résultat de l'analyse.

4. Le procédé (300) selon la Revendication 3, où la première sous-classe d'éléments de contenus multimédias est pour un premier genre musical et la deuxième sous-classe d'éléments de contenus multimédias est pour un deuxième genre musical.

5. Le procédé (300) selon la Revendication 1, où le premier profil de classification de supports multimédias (235) est entraîné au moyen d'une maximisation d'espérance initialisée par une mise en grappes par la méthode des k-moyennes.

6. Le procédé (300) selon l'une quelconque des Revendications précédentes, où l'ensemble de caractéristiques comprend au moins une caractéristique parmi intensité sonore, hauteur du son, luminosité, bande passante spectrale, énergie dans une ou plusieurs bandes spectrales, stabilité spectrale ou coefficients cepstraux de fréquence Mel (MFCC).

7. Le procédé (300) selon l'une quelconque des Revendications précédentes, où :
l'élément de contenu multimédia comprend en outre un contenu vidéo,
la première classe d'éléments de contenus multimédias est en outre pour des éléments de contenus multimédias comprenant une première classe vidéo, et
la deuxième classe d'éléments de contenus multimédias est en outre pour des éléments de contenus multimédias comprenant une deuxième classe vidéo.

8. Le procédé (300) selon l'une quelconque des Revendications précédentes, où la première classe d'éléments de contenus multimédias est pour des éléments de contenus multimédias contenant une ou plusieurs altérations et la deuxième classe d'éléments de contenus multimédias est pour des éléments de contenus multimédias ne contenant pas les une ou plusieurs altérations, où les une ou plusieurs altérations comprennent une ou plusieurs caractéristiques indicatives d'un élément de contenu multimédia altéré de façon à éviter une détection par un service d'identification.

9. Le procédé (300) selon la Revendication 8, où au moins une des affirmations suivantes est vraie :
a) l'élément de contenu multimédia comprend en outre un contenu vidéo, où les une ou plusieurs altérations comprennent une bordure non statique à une périphérie du contenu vidéo, ou
b) l'élément de contenu multimédia comprend un contenu audio, où les une ou plusieurs altérations comprennent au moins un élément parmi une augmentation d'une vitesse de lecture du contenu audio ou une polarité inverse d'un canal stéréo.

10. Le procédé selon l'une quelconque des Revendications précédentes, comprenant en outre l'exécution des opérations suivantes en réponse à la détermination que l'élément de contenu multimédia appartient à la première classe :
la comparaison (322), par le deuxième dispositif de traitement, de l'empreinte numérique à une pluralité d'empreintes numériques additionnelles d'une pluralité d'œuvres connues,
l'identification (324) d'une correspondance entre l'empreinte numérique et une empreinte numérique additionnelle de la pluralité d'empreintes numériques additionnelles, où l'empreinte numérique additionnelle est pour un segment d'une œuvre connue de la pluralité d'œuvres connues, et
la détermination (326) que l'élément de contenu multimédia comprend une instance de l'œuvre connue.

11. Le procédé (300) selon la Revendication 10, où :
le premier dispositif de traitement est associé à une première entité qui héberge un contenu généré par l'utilisateur,
l'élément de contenu multimédia comprend un contenu généré par l'utilisateur téléchargé vers la première entité, et
le deuxième dispositif de traitement est associé à une deuxième entité comprenant une base de données de la pluralité d'œuvres connues.

12. Un support lisible par ordinateur contenant des instructions qui, lorsqu'elles sont exécutées par le premier dispositif de traitement et le deuxième dispositif de traitement, amènent le premier dispositif de traitement et le deuxième dispositif de traitement à exécuter le procédé selon une ou plusieurs des Revendications 1 à 11.

13. Un système comprenant:
a) une mémoire contenant des instructions,
b) le premier dispositif de traitement tel que défini dans l'une quelconque des Revendications 1 à 11 opérationnellement couplé à la mémoire,
c) le deuxième dispositif de traitement tel que défini dans l'une quelconque des Revendications 1 à 11 opérationnellement couplé à la mémoire,
où le premier dispositif de traitement et le deuxième dispositif de traitement exécutent le procédé selon l'une quelconque des Revendications 1 à 11 en réponse à l'exécution des instructions.
